# EUROPEAN PATENT SPECIFICATION

(11) **EP 4 202 617 B1**
(45) Date of publication and mention of the grant of the patent: **18.12.2024**
(21) Application number: 22773099.1
(22) Date of filing: 22.09.2022
(51) Int. Cl.: G06F 3/01, G06F 3/0481, G02B 27/01, G02B 27/00

(54) **WEARABLE DEVICE AND METHOD FOR DISPLAYING MULTIMEDIA CONTENT**
WEARABLE-VORRICHTUNG UND VERFAHREN ZUR ANZEIGE VON MULTIMEDIAINHALT
DISPOSITIF PORTABLE ET PROCÉDÉ PERMETTANT D'AFFICHER UN CONTENU MULTIMÉDIA

(30) Priority: 06.11.2021 KR 20210151835; 01.12.2021 KR 20210170075
(43) Date of publication of application: 28.06.2023
(73) Proprietor: Samsung Electronics Co., Ltd., Suwon-si, Gyeonggi-do 16677 (KR)
(72) Inventor: YOO, Sanga, Suwon-si, Gyeonggi-do 16677 (KR); SHIN, Giyoung, Suwon-si, Gyeonggi-do 16677 (KR); LEE, Eunbin, Suwon-si, Gyeonggi-do 16677 (KR)
(74) Representative: HGF
(86) International application number: PCT/KR2022/014167
(87) International publication number: WO 2023/080443

(56) References cited:
- KR-A- 20150 084 925
- KR-A- 20190 071 021
- KR-A- 20190 101 323
- US-A1- 2012 242 678
- US-A1- 2016 379 396
- US-A1- 2017 343 809
- US-A1- 2019 206 362

## Description

### [Technical Field]

The following description relates to a wearable device, a method, and a non-transitory computer readable storage medium for a displaying multimedia content.

### [Background Art]

With a view to providing an enhanced user experience, development is being actively made on an electronic device capable of providing an augmented reality (AR) service to display computer-generated information in association with an object in the real-world. Such an electronic device may be a wearable device that may be worn by a user. For example, the electronic device may be AR glasses.

US 2017/343809 A1 discloses, according to its abstract, a method and system for enhancing visual perception of augmented reality presentation. The location and line-of-sight (LOS) of a user wearing a see-through head-mounted display (HMD) is detected. A future background environment to be viewed by the user through the HMD is predicted based on at least the detected location and detected LOS. At least one color-attribute of the future background environment at a background location corresponding to a user LOS is predicted. The predicted color-attribute is compared with at least one color-attribute of an intended foreground supplementary image to be projected on the HMD overlaid onto the future background environment at the background location. When an incompatibility condition is detected, at least one visual parameter of the supplementary image is adjusted to minimize the incompatibility condition, and the supplementary image is projected on the HMD at the background location with the adjusted visual parameter.

US 2016/379396 A1 discloses, according to its abstract, a display device configured to present a virtual field of view comprising a virtual object superimposed on a real-world scene. A controller may be provided and configured to modify display of the virtual object by the display device based on a first color of a real-world object in the real-world scene. The virtual object in the virtual field of view may be superimposed over the real-world object. A lumen output of the display device for displaying the virtual object may be decreased.

### [Disclosure]

### [Technical Solution]

The scope of the present invention is determined according to the independent claims. Various embodiments of the present invention are outlined in the dependent claims.

According to an aspect of the present disclosure, a wearable device is described. The wearable device comprises at least one camera; a display; a memory configured to store instructions; and a processor. The processor is, when the instructions are executed, configured to: receive an input for displaying multimedia content in a display area of the display; based on receiving the input, identify whether brightness of an environment around the wearable device is greater than or equal to reference brightness; based on identifying that the brightness is greater than or equal to the reference brightness, identify whether the multimedia content includes at least one area having specified color; based on identifying that the multimedia content includes the at least one area, obtain a first image for a portion of the environment corresponding to a position in which the multimedia content is to be displayed, via the at least one camera; obtain a second image in which color of the first image is converted; and display, via the display, the multimedia content, as superimposed on the second image displayed in the position.

According to another aspect of the present disclosure, a method for operating a wearable device comprising at least one camera and a display is described. The method comprises: receiving an input for displaying multimedia content in a display area of the display; based on receiving the input, identifying whether brightness of an environment around the wearable device is greater than or equal to reference brightness; based on identifying that the brightness is greater than or equal to the reference brightness, identifying whether the multimedia content includes at least one area having specified color; based on identifying that the multimedia content includes the at least one area, obtaining a first image for a portion of the environment corresponding to a position in which the multimedia content is to be displayed, via the at least one camera; obtaining a second image in which color of the first image is converted; and displaying, via the display, the multimedia content, as superimposed on the second image displayed in the position.

Also disclosed is a non-transitory computer readable storage medium storing therein at least one program. The at least one program comprises instructions to cause, when executed by at least one processor of a wearable device including at least one camera and a display, the wearable device to receive an input for displaying multimedia content in a display area of the display. The at least one program may comprise instructions to cause, when executed by the at least one processor of the wearable device, the wearable device to, based on the reception, identify whether brightness of an environment around the wearable device is greater than or equal to reference brightness. The at least one program may comprise instructions to cause, when executed by the at least one processor of the wearable device, the wearable device to, based on identifying that the brightness is greater than or equal to the reference brightness, identify whether the multimedia content includes at least one area having specified color or not. The at least one program may comprise instructions to cause, when executed by the at least one processor of the wearable device, the wearable device to, based on identifying that the multimedia content includes the at least one area, obtain a first image for a portion of the environment corresponding to a position in which the multimedia content is to be displayed, via the at least one camera. The at least one program may comprise instructions to cause, when executed by the at least one processor of the wearable device, the wearable device to obtain a second image in which color of the first image is converted. The at least one program may comprise instructions to cause, when executed by the at least one processor of the wearable device, the wearable device to display, via the display, the multimedia content, as superimposed on the second image displayed in the position.

### [Description of Drawings]

FIG. 1 shows an exemplary environment including a wearable device;
FIG. 2A is a simplified block diagram of a wearable device;
FIG. 2B is a perspective view illustrating an exemplary wearable device;
FIG. 3 is a flowchart illustrating a method of displaying multimedia content via a display of a wearable device;
FIG. 4 shows an exemplary multimedia content;
FIG. 5 shows exemplary inputs for displaying multimedia content;
FIGS. 6 and 7 show exemplary characteristics of at least one area having a specified color included in multimedia content displayed via a display of a wearable device;
FIG. 8 shows example messages inquiring whether to display a second image for compensating at least one area;
FIG. 9 shows an example of a method of generating a second image;
FIG. 10 shows an example of a method of displaying a second image;
FIG. 11 shows an example of a method of displaying multimedia content with superposition on a second image;
FIG. 12 shows an example of a method of rendering a second image and multimedia content;
FIG. 13A shows an example of a method of adjusting opacity of multimedia content;
FIG. 13B shows an example of a method of displaying a reflective layer with superimposing on multimedia content superimposed on a second image;
FIG. 14 is a flowchart illustrating a method of identifying whether to display multimedia content with superimposing on a second image based on a size of at least one area;
FIG. 15 is a flowchart illustrating a method of identifying whether to display multimedia content with superimposing on a second image based on a position of at least one area;
FIG. 16 is a flowchart illustrating a method of changing color of a second image;
FIG. 17 shows exemplary second images with changed color;
FIG. 18 is a flowchart illustrating a method of displaying multimedia content as an overlay on a part of a second image;
FIG. 19 shows exemplary multimedia content displayed with superimposing on a portion of a second image;
FIG. 20 is a flowchart illustrating a method of processing a second image and multimedia content superimposed on the second image according to movement of an external object;
FIG. 21 shows an example of a method of processing a second image and multimedia content superimposed on the second image according to the movement of an external object;
FIG. 22 is a flowchart illustrating a method of identifying a color of a second visual object displayed under at least one first visual object associated with multimedia content; and
FIG. 23 illustrates exemplary second visual objects displayed under at least one first visual object associated with multimedia content.

### [Mode for Invention]

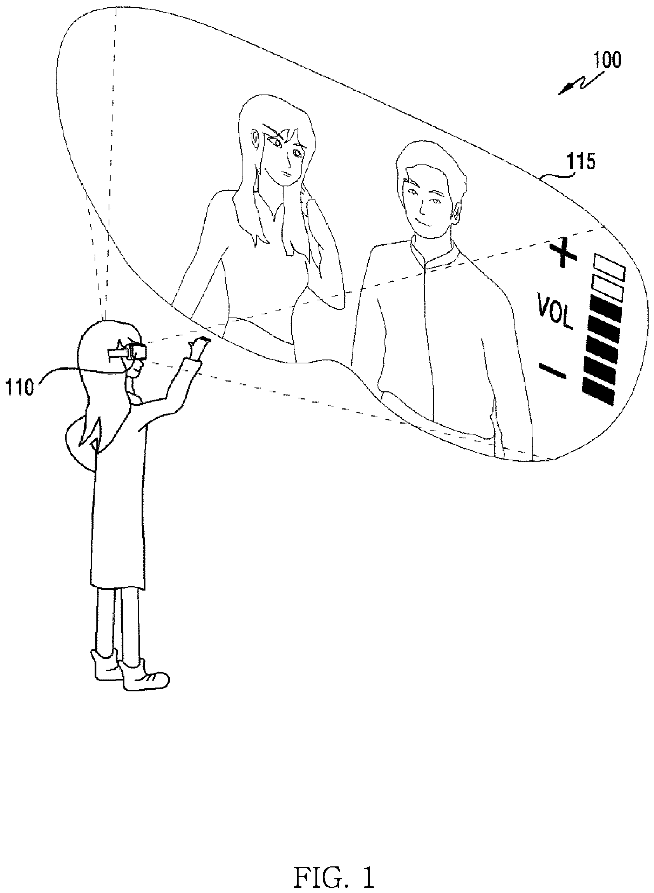

FIG. 1 shows an exemplary environment including a wearable device.

Referring to FIG. 1, the wearable device 110 may be included in an environment 100.

The wearable device 110 may be used to provide an augmented reality (AR) service. In order to provide the augmented reality service, the wearable device 110 may include at least one transparent display. Since the at least one transparent display is configured to transmit external light directed to a first surface of the at least one transparent display through a second surface of the at least one transparent display, the at least one transparent display may display a virtual object together with an external object (for example, a physical object) within the real-world. Throughout the present disclosure, the virtual object may be referred to as a visual object in terms of being viewable by a user. In an embodiment, in order to provide the augmented reality service, the wearable device 110 may include a camera used to recognize the external object, another camera used to track the eyes of the user wearing the wearable device 110, or a combination thereof. In an embodiment, in order to provide the augmented reality service, the wearable device 110 may include a communication circuit. The communication circuit may be used to obtain information on the external object from an external electronic device (e.g., a server or a smartphone), or may be used to obtain information for displaying the virtual object from an external electronic device.

In an embodiment, the wearable device 110 within the environment 100 may receive a user input to control a screen (e.g., multimedia content) displayed on the display of the wearable device 110. Since the screen is displayed along with an external object viewed within a display area 115 of the display, the user input may be defined as another input distinguished from a touch input to the display. For example, the user input may be a gesture input caused by a part of the user's body wearing the wearable device 110 or an eye gaze input caused by a gaze of the user wearing the wearable device 110. However, the present disclosure is not limited thereto.

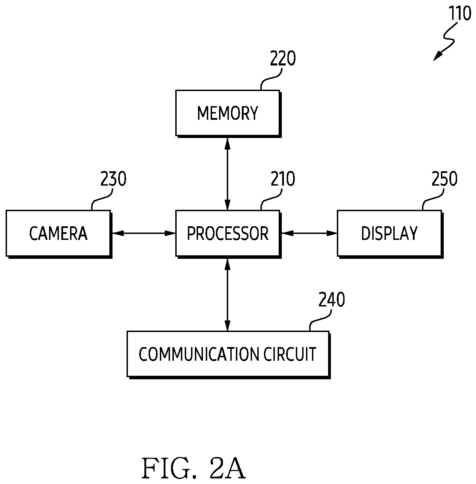

FIG. 2A is a simplified block diagram of a wearable device. The functional components indicated by the block diagram may be incorporated into the wearable device 110 illustrated in FIG. 1.

Referring to FIG. 2A, the wearable device 110 includes a processor 210, a memory 220, a camera 230, and a display 250. The wearable device 110 may include a communication circuit 240.

The processor 210 may control the overall operations of the wearable device 110. For example, the processor 210 may write data to the memory 220 and read out data recorded in the memory 220. For example, the processor 210 may obtain an image via the camera 230. For example, the processor 210 may transmit a signal to or receive a signal from another electronic device via the communication circuit 240. For example, the processor 210 may display information through the display 250. According to various embodiments, the processor 210 may include multiple processors (for example, the wearable device 110 may comprise at least one processor). For example, the processor 210 may include an application processor (AP) to control an upper layer such as e.g., an application program, a communication processor (CP) to control communication, and a display controller (e.g., display driving integrated circuitry) to control a screen displayed on the display 250 and the like.

The processor 210 may be configured to implement the procedures and/or methods proposed in the present disclosure.

The memory 220 may store instructions, commands, control command codes, control data, or user data for controlling the wearable device 110. For example, the memory 220 may store a software application, an operating system (OS), middleware, and/or a device driver.

The memory 220 may include one or more of volatile memory or non-volatile memory. The volatile memory may include, for example, a dynamic RAM (DRAM), a static RAM (SRAM), a synchronous DRAM (SDRAM), a phase-change RAM (PRAM), a magnetic RAM (MRAM), a resistive RAM (RRAM), a ferroelectric RAM (FeRAM), and the like. The non-volatile memory may include a read only memory (ROM), a programmable ROM (PROM), an electrically programmable ROM (EPROM), an electrically erasable programable ROM (EEPROM), a flash memory and the like.

The memory 220 may further include a non-volatile storage media such as e.g., a hard disk drive (HDD), a solid-state disk (SSD), an embedded multimedia card (eMMC), a universal flash storage (UFS), and so on.

The memory 220 may be operably or operatively coupled with the processor 210. The memory 220 may store one or more programs. For example, the one or more programs may include, when executed by the processor 210 of the wearable device 110, instructions that cause the wearable device 110 to execute at least a portion of the operations of the wearable device 110 exemplified through the following descriptions.

For example, the one or more programs may be obtained from an external electronic device (e.g., a server or a smartphone). For example, the one or more programs stored in a non-volatile memory of the external electronic device may be provided from the external electronic device to the wearable device 110, in response to an input to the wearable device 110. For example, the one or more programs stored in the non-volatile memory of the external electronic device may be provided from the external electronic device to the wearable device 110, in response to an input to the external electronic device. However, the present disclosure is not limited thereto.

The camera 230 may be used to obtain an image of the environment viewed within a display area of the display 250 (e.g., the display area 115 shown in FIG. 1). The camera 230 may be disposed to face the environment to obtain an image of the environment viewed within the display area of the display 250. The field of view (FOV) of the camera 230 disposed to face the environment may be configured to cover an area wider than the display area of the display 250, or to cover an area corresponding to the display area of the display 250, in order to obtain an image of the environment viewed within the display area of the display 250. The field of view of the camera 230 disposed to face the environment may be configured to cover an area wider than the area covered by the field of view of the user wearing the wearable device 110, or to cover an area corresponding to the area covered by the user's field of view, in order to obtain an image of the environment viewed within the display area of the display 250. The camera 230 disposed to face the environment may include a plurality of cameras to obtain an image of the environment viewed within the display area of the display 250. In an embodiment, the plurality of cameras may be configured with a pair of cameras to obtain a stereoscopic image. A direction in which a first camera included in the pair of cameras faces may be the same as a direction in which a second camera included in the pair of cameras faces, in order to obtain a stereoscopic image. In order to obtain such a stereoscopic image, the field of view of the first camera and the field of view of the second camera may have disparity. In an embodiment, the camera 230 disposed to face the environment may include a component to obtain depth information. However, the disclosure is not limited thereto.

The camera 230 may be further used to track the eyes of the user wearing the wearable device 110. For example, the camera 230 may be disposed to face the user's eyes so that the field of view of the camera 230 covers an area including the user's eyes wearing the wearable device 110. The camera used to track the eyes of the user may be different to the camera disposed to face the environment; for example, the camera 230 may include a plurality of cameras, with at least one camera used to track the eyes of the user and at least one camera used to obtain an image of the environment.

The camera 230 may be operably or operatively coupled with the processor 210.

The communication circuit 240 may have a variety of communication functions (e.g., cellular communication, Bluetooth, NFC, Wi-Fi, etc.) for communication between the wearable device 110 and at least one external device (e.g., a smartphone, a server, etc.). In other words, the communication circuit 240 may establish communication between the wearable device 110 and the at least one external device.

The communication circuitry 240 may be operably or operatively coupled with processor 210.

The display 250 may include at least one transparent display so that a user wearing the wearable device 110 can view the real-world. For example, the display 250 may be configured to cause external light directed to a first surface to go through a second surface different from the first surface, and configured to display information on the second surface. For example, the second surface may be opposite to the first surface. The display 250 may display a graphical user interface (GUI) so that the user can interact with the wearable device 110. In certain embodiments, the display 250 may be partitioned into different areas or regions. In certain embodiments, the display 250 may comprise a plurality of displays.

The display 250 may be operably or operatively coupled with processor 210.

In an embodiment, the processor 210 may display multimedia content on the display area of the display 250 along with an external object in the real world, viewed within the display area of the display 250 (e.g., the display area 115 shown in FIG. 1). In an embodiment, the multimedia content may be displayed on the display area of the display 250, based on data received from another electronic device through the communication circuit 240. In an embodiment, the multimedia content may be displayed on the display area of the display 250, independently (or irrespectively) of the other electronic device, based on data processed by the processor 210. In an embodiment, the multimedia content may include information related to the external object viewed within the display area of the display 250. When the multimedia content includes information related to the external object, the multimedia content may be displayed as associated with the external object. For example, when the multimedia content includes information related to the external object, the multimedia content may be displayed in proximity to the external object or as at least partially overlapped with the external object. In an embodiment, the multimedia content may include information independent from the external object viewed within the display area of the display 250.

In an embodiment, the processor 210 may obtain recognition information about an external object in the real world viewed within the display area of the display 250. The processor 210 may transmit information about an image including a visual object corresponding to the external object obtained through the camera 230, to another electronic device (e.g., a smartphone, a server, etc.) through the communication circuit 240, and obtain the recognition information on the external object from the other electronic device through the communication circuit 240. The processor 210 may obtain the recognition information on the external object by recognizing the image including the visual object corresponding to the external object, in a stand-alone state. For example, the processor 210 may obtain the recognition information on the external object by recognizing the image including the visual object corresponding to the external object without use of the other electronic device. However, the present disclosure is not limited thereto.

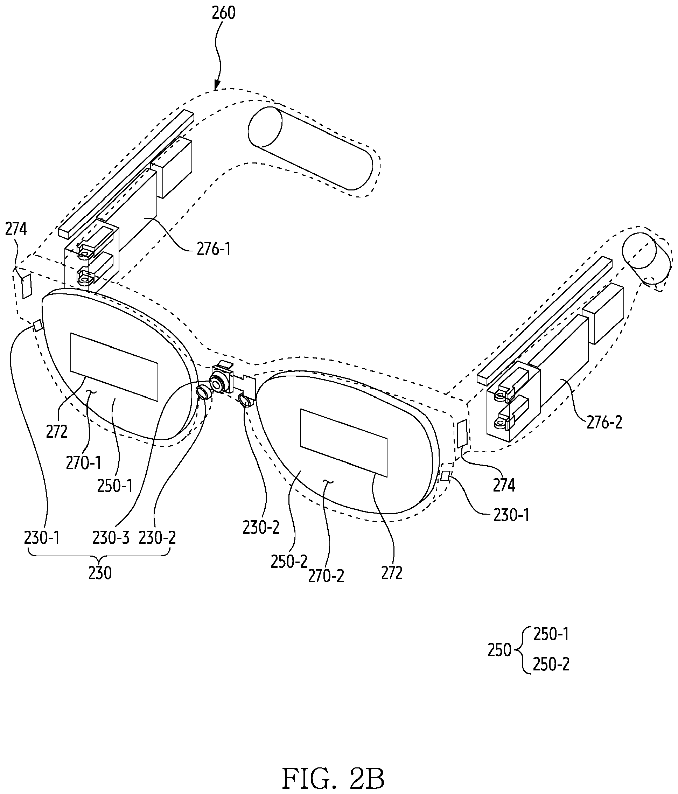

FIG. 2B is a perspective view illustrating an exemplary wearable device. For example, the exemplary wearable device may be the wearable device 110 illustrated in FIG. 2A.

Referring to FIG. 2B, a frame 260 of the wearable device 110 may have a physical structure worn on a part of the user's body. For example, the frame 260 may be configured so that, when the wearable device 110 is worn by the user, a first display 250-1 (or a first display region 250-1) in the display 250 is positioned in front of the user's right eye and a second display 250-2 (or a second display region 250-2) in the display 250 is positioned in front of the user's left right eye. In certain embodiments, the first display 250-1 and the second display 250-2 are connected to provide a continuous display in front of the user's eyes (for example, with a display portion in front of the bridge of the user's nose to join the first display 250-1 and the second display 250-2).

In an embodiment, the display 250 including the first display 250-1 and the second display 250-2 may include, for example, a liquid crystal display (LCD), a digital mirror device (DMD), liquid crystal on silicon (LCoS), an organic light emitting diode (OLED), a micro-LED, or the like. In an embodiment, when the display 250 is configured of LCD, DMD, or LCoS, the wearable device 110 may include a light source (not shown in FIG. 2B) emitting light toward the display area of the display 250. In an embodiment, when the display 250 is formed of a OLED or a micro-LED, the wearable device 110 may not include the light source. However, the disclosure is not limited thereto.

In an embodiment, the wearable device 110 may further include a first transparent member 270-1 and a second transparent member 270-2. For example, each of the first transparent member 270-1 and the second transparent member 270-2 may be formed of a glass plate, a plastic plate, or a polymer. For example, each of the first transparent member 270-1 and the second transparent member 270-2 may be transparent or translucent.

In an embodiment, the wearable device 110 may include a waveguide 272. For example, the waveguide 272 may be used to transmit a light source generated by the display 250 to the eyes of a user wearing the wearable device 110. For example, the waveguide 272 may be formed of glass, plastic, or polymer. For example, the waveguide 272 may include a nano-pattern configured with a polygonal or curved lattice structure in the waveguide 272 or on a surface of the waveguide 272. For example, light incident to one end of the waveguide 272 may be transferred to the user through the nano-pattern. In an embodiment, the waveguide 272 may include at least one of at least one diffractive element (e.g., a diffractive optical element (DOE), a holographic optical element (HOE), etc.) or a reflective element (e.g., a reflective mirror). For example, the at least one diffractive element or the reflective element may be used to guide light to the user's eyes. In an embodiment, the at least one diffractive element may include an input optical member and/or an output optical member. In an embodiment, the input optical member may mean an input grating area used as an input terminal of light, and the output optical member may mean an output grating area used as an output terminal of light. In an embodiment, the reflective element may include a total internal reflection optical element or a total internal reflection waveguide for total internal reflection (TIR).

In an embodiment, the camera 230 in the wearable device 110 may include at least one first camera 230-1, at least one second camera 230-2, and/or at least one third camera 230-3.

In an embodiment, the at least one first camera 230-1 may be used for motion recognition or spatial recognition of three degrees of freedom (3DoF) or six degrees of freedom (6DoF). For example, the at least one first camera 230-1 may be used for head tracking or hand detection. For example, the at least one first camera 230-1 may be configured with a global shutter (GS) camera. For example, the at least one first camera 230-1 may be configured with a stereo camera. For example, the at least one first camera 230-1 may be used for gesture recognition.

In an embodiment, the at least one second camera 230-2 may be used to detect and track a pupil. For example, the at least one second camera 230-2 may be configured with a GS camera. For example, the at least one second camera 230-2 may be used to identify a user input defined by a user's gaze.

In an embodiment, the at least one third camera 230-3 may be referred to as a high resolution (HR) or photo video (PV) camera, and provide an auto-focusing (AF) function or an optical image stabilization (OIS) function. In an embodiment, the at least one third camera 230-3 may be configured with a GS camera or a remote shutter (RS) camera.

In an embodiment, the wearable device 110 may further include an LED unit 274. For example, the LED unit 274 may be used to assist in tracking the pupil through at least one second camera 230-2. For example, the LED unit 274 may be configured with an infrared LED (IR LED). For example, the LED unit 274 may be used to compensate for brightness when the illuminance around the wearable device 110 is low.

In an embodiment, the wearable device 110 may further include a first PCB 276-1 and a second PCB 276-2. For example, each of the first PCB 276-1 and the second PCB 276-2 may be used to transmit an electrical signal to components of the wearable device 110, such as the camera 230 or the display 250. In an embodiment, the wearable device 110 may further include an interposer disposed between the first PCB 276-1 and the second PCB 276-2. However, the present disclosure is not limited thereto.

Such a wearable device may include a display (e.g., a transparent display) configured to transmit external light directed to a first surface through a second surface to provide an augmented reality service.

Meanwhile, multimedia content displayed via the display may include an area having a certain color (this may also be referred to as a predetermined, or predefined, or specific, or specified, or set etc. color). When displaying an area having the certain color via the display, the wearable device may express the area without any light emission of at least one light emitting element (or at least one light emitting device) for the area (where, for example, the at least one light emitting element may be included in the wearable device (for example, in the display thereof)). Since the area is expressed without any light emission of the at least one light emitting element, an external object may be visible through the area. Since the external object viewed (that is, being visible) through the area may deteriorate the quality of the multimedia content, a method for enhancing the displaying of the area may be required.

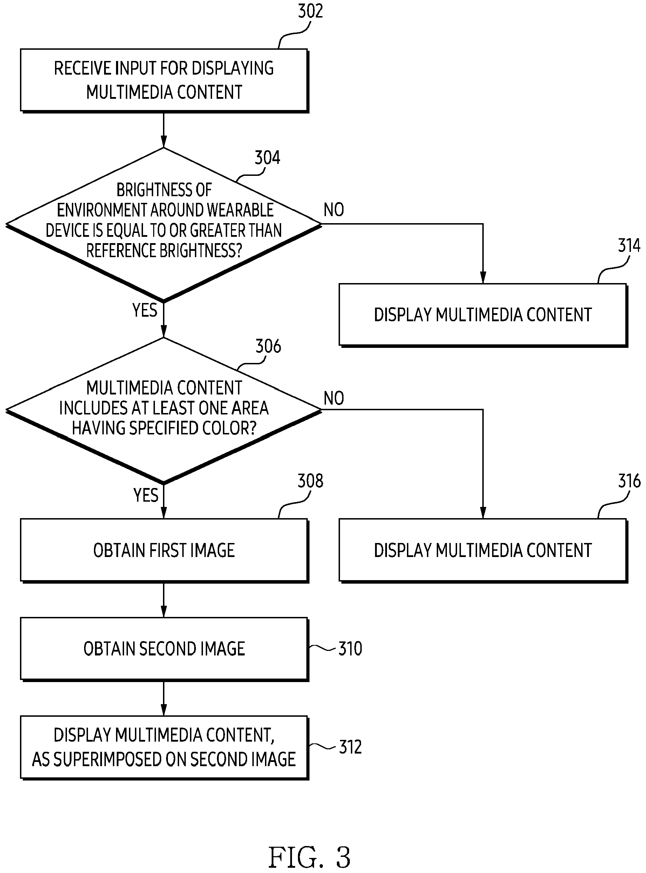

FIG. 3 is a flowchart illustrating a method of displaying multimedia content through a display of a wearable device. This method may be executed, for example, by the wearable device 110 shown in FIG. 1, the wearable device 110 shown in FIG. 2A or 2B, or the processor 210 shown in FIG. 2A. In certain embodiments, one or more of the operations shown in FIG. 3 may be omitted and/or one or more operations shown in FIG. 3 may be performed in a different order to that shown.

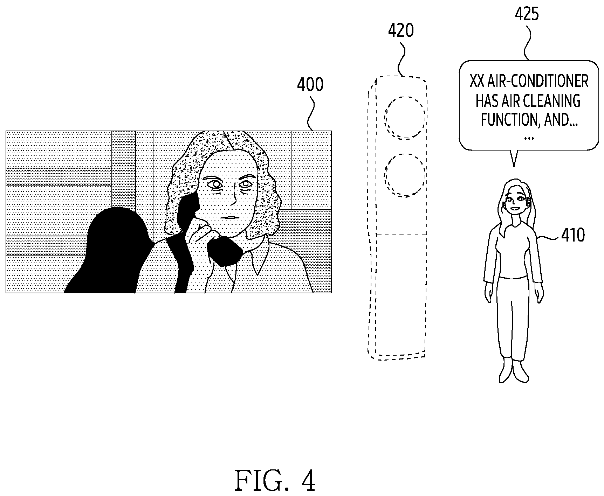

FIG. 4 shows exemplary multimedia contents.

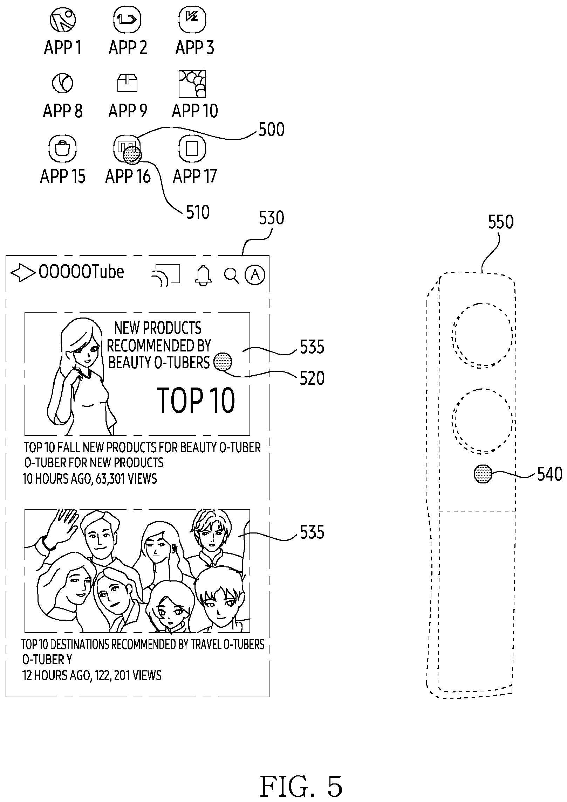

FIG. 5 shows exemplary inputs for displaying multimedia content.

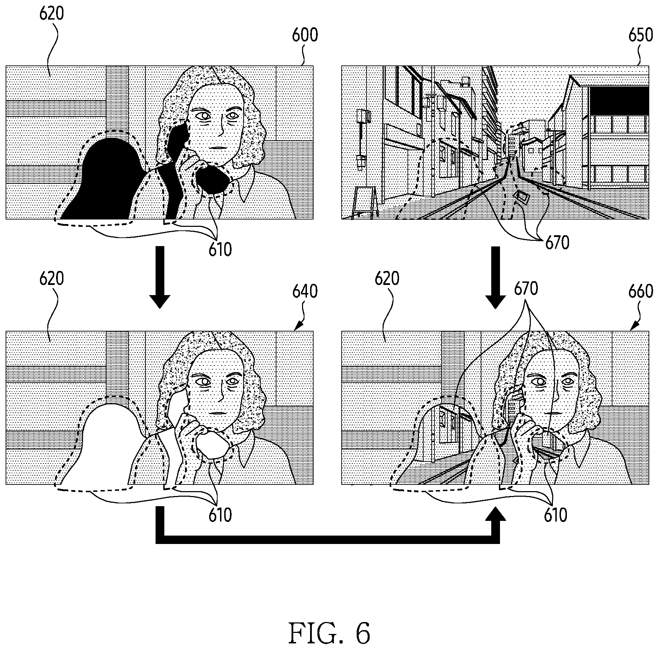

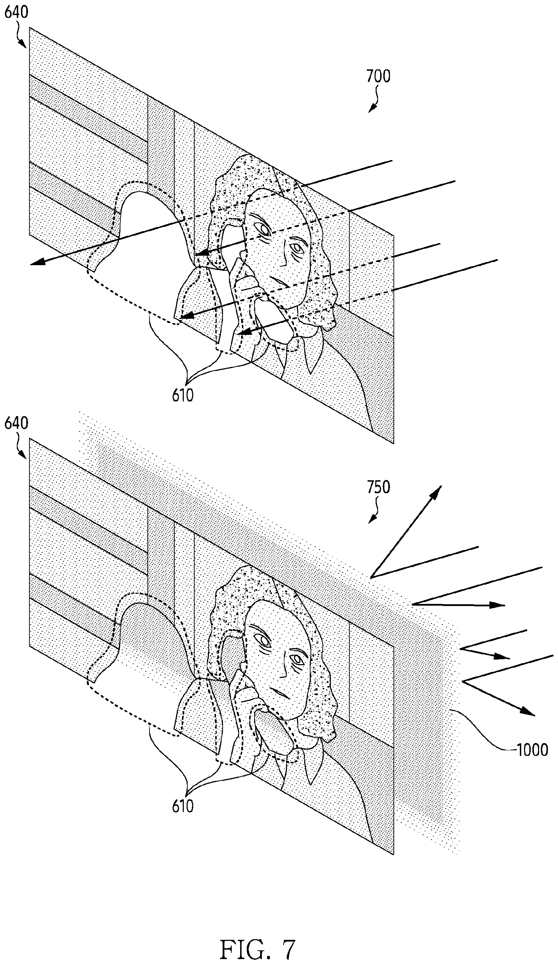

FIGS. 6 and 7 show exemplary characteristics of at least one area having a specified color included in multimedia content displayed via a display of a wearable device.

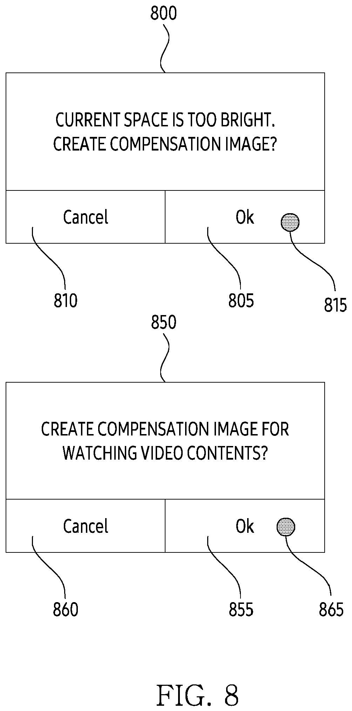

FIG. 8 shows example messages inquiring whether to display a second image for compensating at least one area.

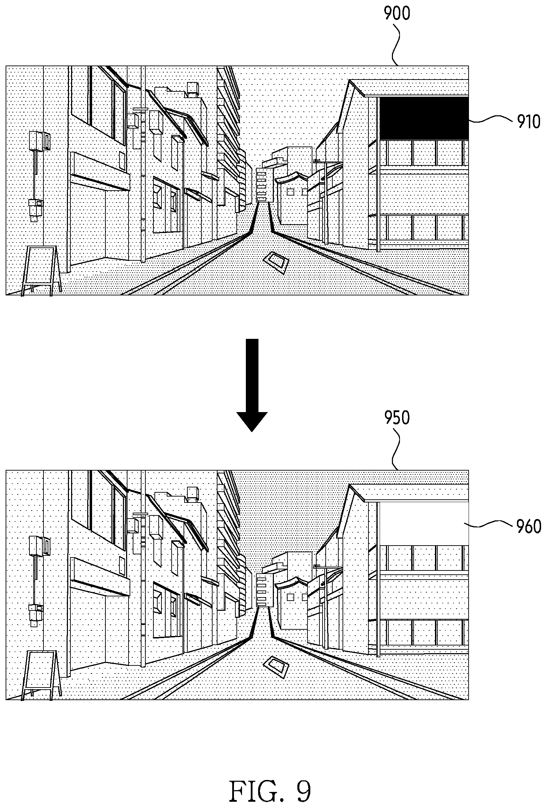

FIG. 9 shows an example of a method of generating a second image.

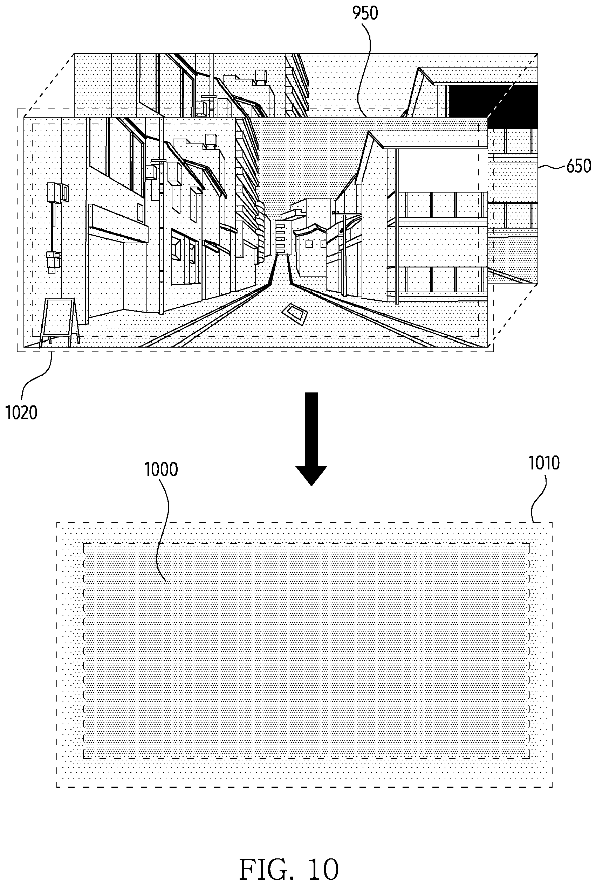

FIG. 10 shows an example of a method of displaying a second image.

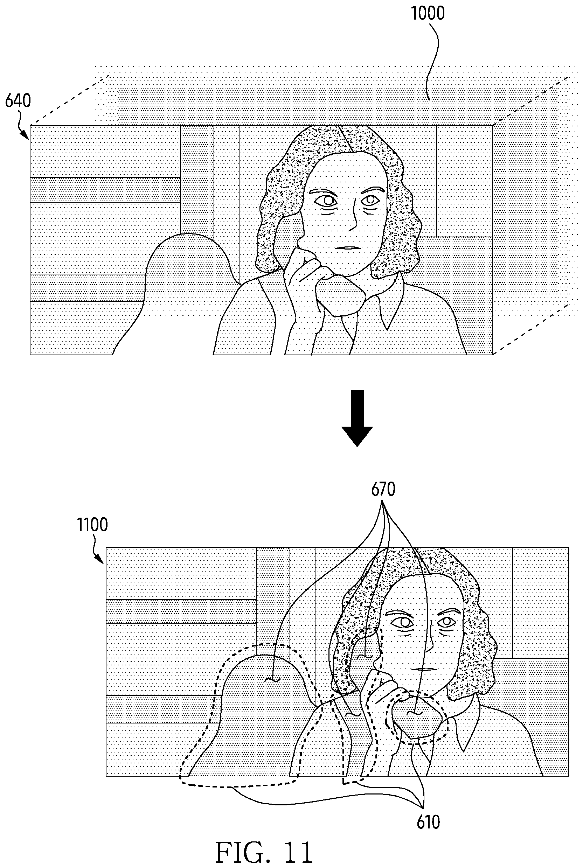

FIG. 11 shows an example of a method of displaying multimedia content with superposition on a second image.

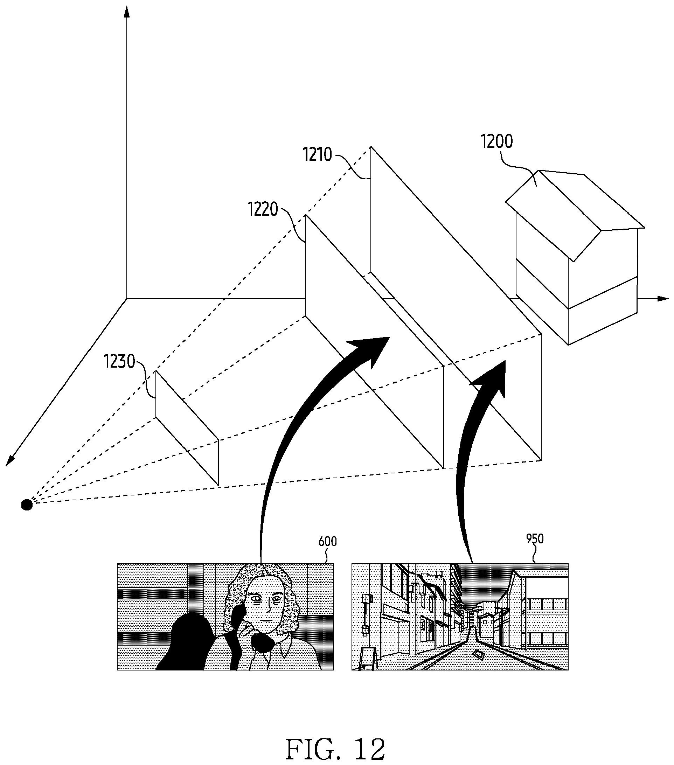

FIG. 12 shows an example of a method of rendering a second image and multimedia content.

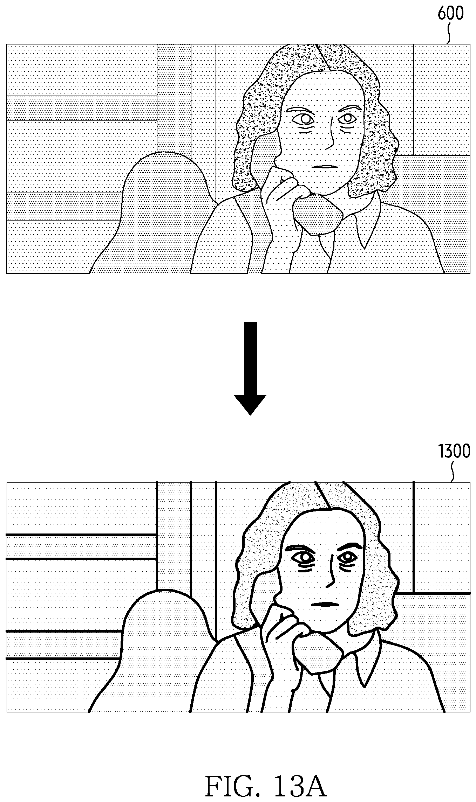

FIG. 13A shows an example of a method of adjusting opacity of multimedia content.

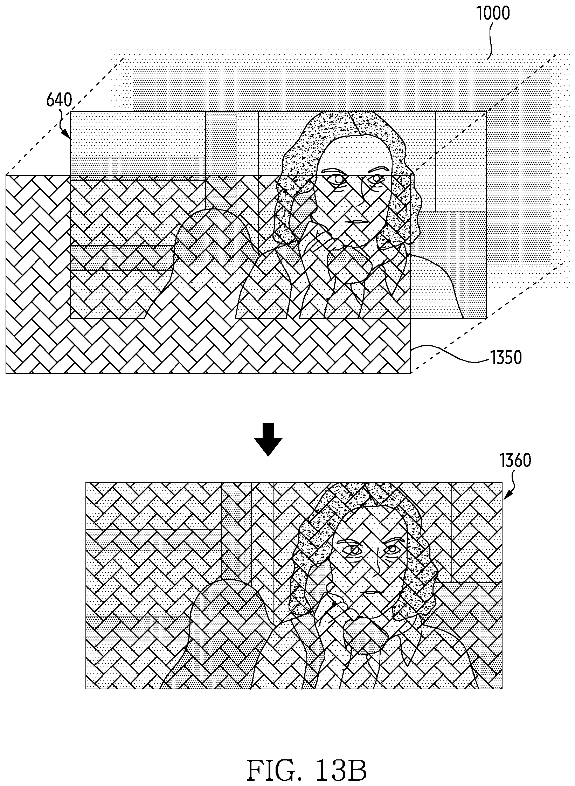

FIG. 13B shows an example of a method of displaying a reflective layer with superimposing on multimedia content superimposed on a second image.

Referring to FIG. 3, in operation 302, the processor 210 receives an input for displaying multimedia content.

The multimedia content may be configured with visual information. For example, the multimedia content may include at least one of an image including at least one visual object or at least one text. For example, referring to FIG. 4, the multimedia content may be an image 400. For example, the image 400 may include a static image or a dynamic image (e.g., video), or the image 400 may be included in a video corresponding to the multimedia content. In an embodiment, the image 400 may be obtained via communication with an external electronic device. In an embodiment, the image 400 may be obtained by processing of the processor 210 without communication with an external electronic device. However, the present disclosure is not limited thereto.

In an embodiment, the image 400 may be related to an external object within the environment viewed through the display 250. For example, the processor 210 may obtain an image of the external object through the camera 230, and obtain the image 400 related to the external object based on recognition of the image. For example, the image 400 may include description information or attribute information about the external object. In the meantime, the image recognition may be executed in the wearable device 110, in an electronic device distinct from the wearable device 110, or based on interworking in between the wearable device 110 and the electronic device. However, the present disclosure is not limited thereto. In an embodiment, the image 400 may be independent of the environment viewed through the display 250.

The multimedia content may be an emoji graphic object 410. For example, the emoji graphical object 410 may represent a user of the wearable device 110. For example, the graphic emoji object 410 may have a shape set to suit the user's intention, according to manipulation. For example, the graphic emoji object 410 may have a shape set based on recognizing an image of the user of the wearable device 110. For example, the graphical emoji object 410 may be obtained based on featuring points extracted from a visual object in the image corresponding to the user (or the user's face). For example, the graphic emoji object 410 may indicate a service provider presented through the wearable device 110. However, the present disclosure is not limited thereto. In an embodiment, the emoji graphical object 410 may be configured with a two-dimensional (2D) visual object or a three-dimensional (3D) visual object. In an embodiment, the emoji graphical object 410 may be displayed as associated with an external object 420 (e.g., an air conditioner) within the environment viewed within the display area of the display 250. For example, the emoji graphical object 410 may take a gesture indicating the external object 420. For example, the emoji graphical object 410 may be positioned adjacent to the external object 420. However, the present disclosure is not limited thereto. In an embodiment, the emoji graphical object 410 may be associated with visual information 425 derived from the emoji graphical object 410. For example, the emoji graphic object 410 and the visual information 425 may be adjacent to each other or connected to each other. However, the present disclosure is not limited thereto. For example, the visual information 425 may include information about an external object (e.g., the external object 420) that is identified by a user input and is viewed within the display of the display 250, or include information on various functions executed according to control of the external object or under the control of the emoji graphic object 410. However, the present disclosure is not limited thereto.

Referring again to FIG. 3, the input may be defined in various ways. For example, referring to FIG. 5, the input may be an input 510 for executing a software application used to display multimedia content. For example, in operation 302, the processor 210 may receive the input 510 for an executable object 500 for the software application used to display the multimedia content. For example, the software application may be used to play the multimedia content via a video streaming service. For example, since executing the software application may mean that the multimedia content is to be displayed, the input received in operation 302 may include the input 510.

For example, the input may be an input 520 for selecting one multimedia content from among a plurality of multimedia contents, displayed on a graphical user interface (GUI) of a software application. For example, in operation 302, the processor 210 may receive the input 520 to select one executable object from among executable objects 535 for playing each of the plurality of multimedia contents displayed within the GUI 530. For example, since selecting one executable object from among the plurality of executable objects 535 means displaying the multimedia content, the input received in operation 302 may include the input 520. In an example, the GUI 530 may be displayed via the display 250 of the wearable device (for example, a head-up display (HUD) arrangement), and an executable object provided within the GUI may be selected through an input (for example, a gesture input) to select a multimedia content. In another example, the input may be an input received from an external electronic device, where a multimedia content has been selected at the external electronic device (for example, via a GUI provided by the external electronic device such as a smartphone) and the selection is communicated to the wearable device and received as the input for displaying the multimedia content.

For example, the input may be an input 540 for selecting an external object viewed within the display area of the display 250. For example, in operation 302, the processor 210 may receive the input 540 for selecting an external object 550. For example, since selecting the external object 550 means that multimedia content related to the external object 550 is to be displayed, the input received in operation 302 may include the input 540.

In certain embodiments, the input may be a gesture input (for example, for selecting an object viewed or displayed within the display area of the display 250), a touch input (for example, for selecting a multimedia content displayed on a GUI of a software application which is output on a touchscreen), or a voice input (for example, where voice recognition is performed to identify an object or multimedia content indicated in a voice input).

Although not shown in FIG. 5, for example, the input may be either identifying that a designated condition in the wearable device 110 in relation to the display of the multimedia content is satisfied or receiving a designated signal in relation to displaying of the multimedia content from another electronic device distinct from the wearable device 110. However, the present disclosure is not limited thereto.

Referring back to FIG. 3, in operation 304, the processor 210 identifies whether brightness of the environment around the wearable device 110 is equal to or greater than reference brightness, based on receiving the input. In an embodiment, the environment may mean a scene viewed in the display area of the display 250. In an embodiment, the environment may mean an area in which the multimedia content is to be displayed. However, the present disclosure is not limited thereto.

The brightness of the environment around the wearable device 110 may be identified using various methods.

In an embodiment, the processor 210 may obtain, through the camera 230, an image for the environment viewed within the display area of the display 250, based on receiving the input, and identify the brightness of the environment based on data indicating the brightness of the obtained image. For example, when the image is encoded based on a YUV attribute, a YUV format, or a YUV model, the data may be of luma data. However, the present disclosure is not limited thereto.

In an embodiment, the processor 210 may obtain sensing data via an illuminance sensor of the wearable device 110 based on receiving the input, and identify the brightness of the environment based on the obtained sensing data. In an embodiment, the processor 210 may identify the brightness of the environment based on the sensing data and the data indicating the brightness of the image.

Meanwhile, in an embodiment, the reference brightness may be set as a value to identify whether an external object is viewed through at least one area within the multimedia content having a specified color, which will be described later referring to operation 306. In an embodiment, the reference brightness may be set as a value to identify whether external light having an intensity greater than or equal to a specified intensity through the at least one area is received by the eyes of the user of the wearable device 110, which will be described later referring to operation 306. However, the present disclosure is not limited thereto.

In an embodiment, the processor 210 may execute operation 306 on condition that the brightness is equal to or greater than the reference brightness, or execute operation 314 on condition that the brightness is less than the reference brightness. In an embodiment, operation 306 or operation 314 may be performed, in a more general sense, based on a brightness of the environment (that is, without specification of a reference brightness).

In other embodiments, the processor 210 may alternatively or additionally (to operation 304) identify, or detect, or determine, whether a brightness of the multimedia content (for example, a brightness of any portion of a current image of a multimedia content) is less than or equal to another reference brightness, based on receiving the input. If so, the outcome is the same as if the outcome of operation 304 is positive; if not, the outcome is the same as if the outcome of operation 304 is negative. The another reference brightness may be set as a value to identify whether one or more areas within the multimedia content have the specified color. For example, the another reference brightness may be set as a value according to an identified brightness of the environment; for instance, the another reference brightness may be set to a higher value in a brighter environment than in a less-bright environment.

In operation 306, the processor 210 identifies (or determines, detects etc.) whether the multimedia content includes the at least one area having the specified color, based on the identifying that the brightness is equal to or greater than the reference brightness.

The specified color may be a color expressed by the display 250 without light emission under the control of the processor 210. For example, the specified color may be black. However, the present disclosure is not limited thereto. For example, while the multimedia content is displayed on the display 250, at least one first light emitting element disposed for the at least one area having the specified color among the plurality of light emitting elements may be deactivated, as opposed to at least one second light emitting element disposed for the remaining area of the multimedia content having a color distinct from the specified color among the plurality of light emitting elements. For example, referring to FIG. 6, multimedia content 600, which is the multimedia content, may include at least one area 610 having the specified color (or substantially the same as the specified color) and a remaining area 620 having a color or colors distinct from the specified color. When the multimedia content 600 is displayed via the display 250, the states of the plurality of light emitting elements in the display 250 may be expressed as in the state 640. For example, in the state 640, the at least one first light emitting element for at least one area 610 among the plurality of light emitting elements may not emit light, while the at least one second light emitting element for the remaining area 620 among the plurality of light emitting elements may emit light. Deactivating of the at least one first light emitting element or emitting no light of the at least one first light emitting element may reduce the quality of the multimedia content 600 displayed via the display 250. For example, the multimedia content 600 may be displayed together with the environment 650, which is an environment viewed within the display area of the display 250. For example, the environment 650, which is an environment including at least one external object viewed within the display area of the display 250, may be an environment around the wearable device 110. For example, the multimedia content 600 may be displayed via the display 250 in a state that the environment 650 is viewed in the display area of the display 250. For example, the multimedia content 600 may be displayed as superimposed on at least a portion of the environment 650 viewed within the display area of display 250. The multimedia content 600 superimposed on the at least a portion of the environment 650 viewed within the display area of the display 250 may be provided via the display 250, as in the display state 660. For example, within the display state 660, at least one area 670 in the environment 650 may be viewed through the at least one area 610. Since the at least one area 670 in the environment 650 viewed through the at least one area 610 is disparate or heterogeneous with respect to the multimedia content 600, the quality of the multimedia content 600 displayed via the display 250 may deteriorate by/in the at least one area 610.

For example, referring to FIG. 7, as the display 250 is configured to transmit external light directed to a first surface of the display 250 through a second surface of the display 250 (that is, the external light may pass through the second surface to the first surface) and the at least one first light emitting element for the at least one area 610 having the specified color is deactivated (or the at least one first light emitting element is otherwise not emitting light) while displaying the multimedia content 600, an intensity of light reaching the user's eyes through the at least one area 610 may be greater than or equal to a reference intensity, as in state 700. For example, the reference intensity may be an intensity of light that can be viewed by the user of the wearable device 110. Meanwhile, although not shown in FIG. 7, in the state 700, the intensity of light reaching the user's eyes through the remaining area 620 may be less than the reference intensity.

Referring back to FIG. 3, the processor 210 may execute operation 308 on condition that the multimedia content includes the at least one area, or execute operation 316 on condition that the multimedia content does not include the at least one area.

In operation 308, the processor 210 obtains a first image for at least a portion of the environment viewed within the display area of the display 250, via the camera 230, based on the identification that the multimedia content includes the at least one area. In an embodiment, the processor 210 may obtain the first image of a portion of the environment corresponding to a position in the display area where the multimedia content is to be displayed, based on the identification. In an embodiment, processor 210 may obtain the first image for at least one portion of the environment corresponding to the at least one area of the multimedia content; for example, with the multimedia content displayed, via the display 250, as superimposed over the environment, or a part thereof, the at least one portion of the environment may correspond to a portion(s) of the environment over which the at least one area of the multimedia content is superimposed.

In an embodiment, operation 308 may be executed based on a user input. For example, referring to FIG. 8, the processor 210 may display a message 800 via the display 250, based on the identification that the multimedia content includes the at least one area. For example, the message 800 may be displayed to identify whether to execute operations 308 to 312. For example, the message 800 may include a text to enquire as to whether to generate a second image (e.g., compensation image) in operation 310. For example, the message 800 may include an executable object 805 to indicate executing operations 308 to 312, and an executable object 810 to indicate refraining from executing operations 308 to 312 (herein, to refrain from performing or executing an operation may be interpreted to mean to not perform or execute the operation, to refrain from executing an operation means that the operation is not executed). For example, the processor 210 may execute operation 308 based on receiving a user input 815 for the executable object 805. In an embodiment, the message 800 may be displayed based on the identification in operation 304 that the brightness is greater than or equal to the reference brightness. When the message 800 is displayed based on the identification that the brightness is equal to or greater than the reference brightness, the processor 210 may execute operation 306 or refrain from executing operation 306, according to a user input for the message 800.

For example, the processor 210 may display a message 850 via the display 250 based on the identification that the multimedia content includes the at least one area. For example, the message 850 may be displayed to identify whether to execute operations 308 to 312. For example, the message 850 may include a text to enquire as to whether to generate a second image (e.g., compensation image) in operation 310. For example, the message 850 may include an executable object 855 to indicate executing operations 308 to 312 and an executable object 860 to indicate refraining from executing operations 308 to 312. For example, the processor 210 may execute operation 308 based on receiving a user input 865 for the executable object 855.

The present disclosure is not limited to operation 308 being executed based on a user input. For example, operation 308 may be performed automatically, for instance in response to identifying that the multimedia content includes at least one area having the specific color.

Referring back to FIG. 3, the first image may include a scene corresponding to the environment 650 illustrated in FIG. 6. For example, referring to FIG. 9, the image 900, which is the first image, may include visual objects respectively corresponding to external objects within the environment 650 illustrated in FIG. 6.

Referring back to FIG. 3, in operation 310, the processor 210 obtains a second image in which color/colors of the first image is/are converted (or inverted - in the following, converting a color/colors may include inverting a color/colors), based on obtaining the first image. For example, in response to obtaining the first image, the processor 210 may obtain the second image in which the color of the first image is converted by processing the first image. For example, referring to FIG. 9, the image 950, which is the second image, may be an image in which the color of the image 900 is converted or inverted. For example, an area 960 in the image 950 corresponding to an area 910 in the image 900 configured with black may be configured with white; that is, the color of the area 960 in the image 950 is inverted in comparison to the color of the area 910 in the image 900.

Referring back to FIG. 3, in operation 312, the processor 210 displays the multimedia content as superimposed on the second image, based on obtaining the second image. In an embodiment, the second image may be displayed at a position identified based on the position of the field of view of the camera 230 when obtaining the first image. For example, the second image may be displayed at the position in which at least one external object located in the field of view of the camera 230 when obtaining the first image is fully overlapped with at least one visual object within the second image corresponding to the at least one external object. For example, the second image displayed at the position may be aligned with the portion of the environment corresponding to a scene at the time of obtaining the first image. For example, the second image may be displayed superimposed over the portion of the environment corresponding to the scene at the time of obtaining the first image. For example, the processor 210 may provide a background layer having a reference color via the display 250, by displaying the second image aligned with the portion of the environment where, in an example, the colors of the second image are inverted compared to the colors of the first image. For example, referring to FIG. 10, the processor 210 may display the image 950 such that the image 950 is aligned with the environment 650. Since the image 950 is aligned with the environment 650 and the environment 650 is viewed through the display 250, the background layer 1000 having the reference color may be provided via the display 250. In an embodiment, peripheries 1010 of the background layer 1000 may have a blur effect. For example, before displaying the image 950 via the display 250 following obtaining the image 950, the processor 210 may apply the blur effect to the peripheries 1020 of the image 950. Such a blur effect applied to the peripheries of the image 950 may be provided at the peripheries 1010 of the background layer 1000. For example, the blur effect may be provided at the peripheries 1010 for harmony in between the multimedia content superimposed on the background layer 1000 and an external object viewed through an area around the multimedia content. For example, the blur effect may be provided at the peripheries 1010 to minimize or prevent the background layer 1000 from being viewed when the multimedia content is superimposed on the background layer 1000. However, the present disclosure is not limited thereto.

Referring back to FIG. 3, the multimedia content may be superimposed on the second image arranged to provide a background layer such as the background layer 1000. For example, since the multimedia content superimposed on the second image is displayed on the background layer formed based on the second image, the intensity of an external light reaching the user's eyes through the at least one area in the multimedia content may be less than the reference intensity. For example, since the multimedia content superimposed on the second image is displayed on the background layer formed based on the second image, at least one area 670 of the environment 650 may not be visible through the at least one area within the multimedia content. For example, referring to FIG. 11, the processor 210 may display the multimedia content 600 as superimposed on the background layer 1000 provided by the display of the second image 950, based on controlling the display 250 as in a state 640. The multimedia content 600 displayed as superimposed on the background layer 1000 may be provided via the display 250, as in a display state 1100. For example, in the display state 1100, at least one area 670 in the environment 650 may not be visible through the at least one area 610, as opposed to at least one area 670 in the environment 650 in the display state 660 shown in FIG. 6. For example, referring to FIG. 7, when displaying the multimedia content 600 with superimposing on the background layer 1000 using the display 250 controlled as in the state 640, the background layer 1000 may cause at least a portion of the external light to be reflected, absorbed, or blocked, so the intensity of light reaching the user's eyes through the at least one area 610 may be less than the reference intensity as in state 750. In other words, the processor 210 can enhance the quality of the multimedia content displayed via the display 250, by displaying the multimedia content as superimposed on the second image.

In an embodiment, a color of the background layer 1000 may be changed according to the color of the environment 650 or the color of the at least one area 670 of the environment 650. For example, the processor 210 may identify the color of the environment 650 or a color of the at least one area 670 of the environment 650 at a designated time interval, and change, based on the identified color, the color of the background layer 1000. However, the present disclosure is not limited thereto.

Referring back to FIG. 3, displaying the multimedia content as superimposed on the second image may be executed based on rendering the second image and the multimedia content on a virtual plane(s) located in a virtual 3D space. For example, referring to FIG. 12, the processor 120 may convert the first image, which is a 2D (two-dimensional) image, to a 3D image (or stereoscopic image) 1200, based on obtaining the first image. For example, when the camera 230 includes a plurality of cameras defined through the description of FIG. 2A or 2B to obtain a 3D image, the processor 120 may respectively obtain first images via the multiplicity of cameras and obtain a 3D image 1200 based on the first images. For example, the processor 120 may obtain depth information when obtaining the first images, and obtain the 3D image 1200 converted from the first image based on the depth information. However, the present disclosure is not limited thereto. Meanwhile, the processor 120 may identify a position of a first virtual plane 1210 based on the position of the 3D image 1200 in a virtual 3D space, and render the second image 950 on the first virtual plane 1210. Meanwhile, the processor 120 may render the multimedia content 600 on a second virtual plane 1220 (for example, a position of the second virtual plane 1220 may be based on the position of the first virtual plane 1210). The processor 210 may display the multimedia content 600 superimposed on the second image 950, by projecting the second image 950 rendered on the first virtual plane 1210 and the multimedia content 600 rendered on the second virtual plane 1220 onto a third virtual plane 1230 on/in the virtual 3D space corresponding to the display area of the display 250 (for example, the position of the third virtual plane 1230 may be based on the position of the first virtual plane 1210 and/or the position of the second virtual plane 1220). As a result of this, for example, only the third virtual plane 1230 may be viewable by a user of the wearable device, allowing for viewing of the multimedia content 600 superimposed over the second image 950 which, in turn, is superimposed over (or displayed on) a portion of the environment corresponding to the position in which the multimedia content 600 is to be displayed. However, the present disclosure is not limited thereto.

For example, displaying the multimedia content as superimposed on the second image may be executed by building up the second image 950 and the multimedia content 600 on different virtual layers, or virtual planes, in a virtual 3D space. In certain examples, the position of the different virtual layers relative to one another is based on a size of the multimedia content 600 as displayed via the display 250 (e.g., a size of the displayed multimedia content 600 in the FOV of a user wearing the wearable device), and/or a position of the displayed multimedia content 600 on the display 250 (e.g., the position of the displayed multimedia content 600 in the FOV of a user wearing the wearable device).

Meanwhile, referring back to FIG. 3, the processor 210 may adjust opacity of the multimedia content before displaying the multimedia content superimposed on the second image. For example, referring to FIG. 13A, the processor 210 may obtain the multimedia content 1300 by adjusting the opacity of the multimedia content 600. For example, the opacity of the multimedia content 1300 may be greater than the opacity of the multimedia content 600 (i.e., increased opacity). After obtaining the multimedia content 1300 with adjusted opacity, the processor 210 may display the multimedia content 1300 superimposed on the second image.

Meanwhile, referring back to FIG. 3, the processor 210 may further display a reflective layer superimposed on the multimedia content superimposed on the second image. For example, the reflective layer may include blue or purple color with the properties that are robust to light reflection. For example, referring to FIG. 13B, the processor 210 may further display a reflective layer 1350, as superimposed on the multimedia content 600, which is superimposed on the background layer 1000 and displayed using the display 250 controlled as in the state 640. For example, the multimedia content 600 between the background layer 1000 and the reflective layer 1350 may be provided as in a display state 1360. For example, the reflective layer 1350 may be partially transparent to allow for the multimedia content 600 to be viewable through the reflective layer 1350.

Meanwhile, in operation 314, the processor 210 may display the multimedia content based on identifying that the brightness is less than the reference brightness. For example, the processor 210 may refrain from executing the operation 306 and display the multimedia content. For example, the processor 210 may display the multimedia content without displaying the second image.

Meanwhile, in operation 316, the processor 210 may display the multimedia content based on identifying that the multimedia content does not include the at least one area. For example, the processor 210 may refrain from executing the operations 308 to 312 and display the multimedia content. For example, the processor 210 may display the multimedia content without displaying the second image.

Although the foregoing description in relation to FIG. 3 includes description of an example in which the processor 210 in the wearable device 110 executes the operations 302 to 312, this is only for convenience of description. At least some of those operations 302 to 312 in FIG. 3 may be executed by an external electronic device (e.g., smart phone, tablet, personal computer (PC), server, etc.) connected to the wearable device 110. However, the present disclosure is not limited thereto.

As described above, the wearable device 110 can prevent, alleviate or minimize at least a portion of the external environment from being viewed through the displayed multimedia content, by displaying the multimedia content as superimposed on the second image.

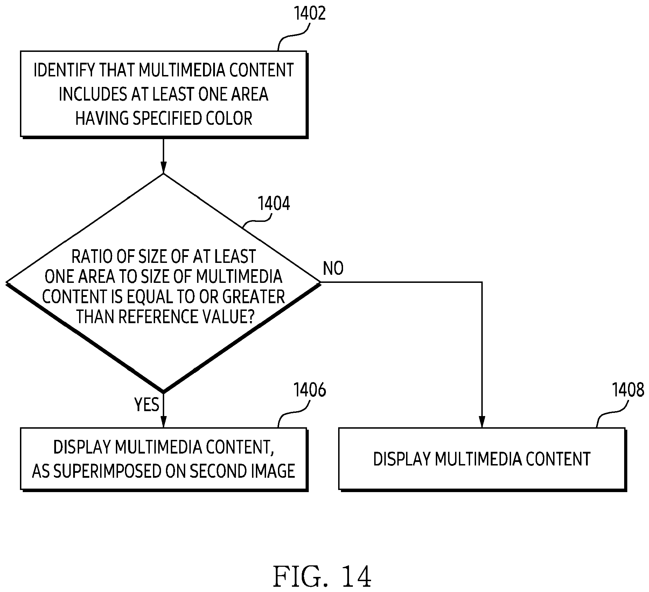

FIG. 14 is a flowchart illustrating a method of identifying whether to display multimedia content with superimposing on a second image based on the size of at least one area. This method may be executed by the wearable device 110 shown in FIG. 1, the wearable device 110 shown in FIG. 2A or 2B, or the processor 210 shown in FIG. 2A. In certain embodiments, one or more of the operations shown in FIG. 14 may be omitted and/or one or more operations shown in FIG. 14 may be performed in a different order to that shown.

Referring to FIG. 14, in operation 1402, the processor 210 identifies that the multimedia content includes the at least one area having the specified color. For example, the processor 210 may identify that the multimedia content includes the at least one area according to the identification in operation 306.

In operation 1404, the processor 210 may identify whether a ratio of the size of the at least one area to the size of the multimedia content is equal to or greater than a reference value, based on the identification. For example, when the size of the at least one area is relatively small, the decrease in quality of the multimedia content owing to the at least one area may be relatively small, so the processor 210 may identify whether the ratio is equal to or greater than the reference value. For example, the processor 210 may execute operation 1404 to reduce resource consumption of the wearable device 110 by the execution of operation 308 and operation 310.

The processor 210 may execute operation 1406 on condition that the ratio is equal to or greater than the reference value, or execute operation 1408 on condition that the ratio is less than the reference value.

In operation 1406, the processor 210 may display the multimedia content as superimposed on the second image, based on identifying that the ratio is equal to or greater than the reference value. For example, the processor 210 may obtain the second image by executing operations 308 and 310 based on identifying that the ratio is greater than or equal to the reference value, and display the multimedia content as superimposed on the second image.

In operation 1408, the processor 210 may display the multimedia content based on identifying that the ratio is less than the reference value. For example, the processor 210 may display the multimedia content without displaying the second image.

As described above, through the execution of operation 1404, the wearable device 110 can adaptively execute obtaining the first image and the second image and displaying the multimedia content as superimposed on the second image. The wearable device 110 can optimize the efficiency of using the resource in the wearable device 110, with such adaptive execution.

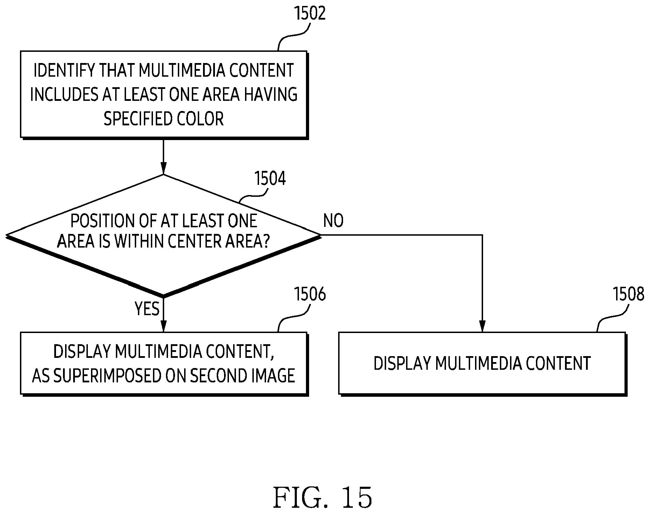

FIG. 15 is a flowchart illustrating a method of identifying whether to display multimedia content with superimposing on a second image based on a position of at least one area. This method may be executed by the wearable device 110 shown in FIG. 1, the wearable device 110 shown in FIG. 2A or 2B, or the processor 210 shown in FIG. 2A. In certain embodiments, one or more of the operations shown in FIG. 15 may be omitted and/or one or more operations shown in FIG. 15 may be performed in a different order to that shown.

Referring to FIG. 15, in operation 1502, the processor 210 identifies that the multimedia content includes the at least one area having the specified color. For example, the processor 210 may identify that the multimedia content includes the at least one area according to the identification in operation 306.

In operation 1504, the processor 210 may identify whether the position of the at least one area is within a center area in the display area of the display 250, based on the identification. For example, the center area may be an attention area of a user wearing the wearable device 110. For example, the center area may be an area within the display area of the display 250 that the user frequently views. For example, when the at least one area is positioned within a corner area in the display area distinct from the center area, the decrease in quality of the multimedia content owing to the at least one area is relatively small, so the processor 210 may identify whether the position of the at least one area is within the center area. For example, the processor 210 may execute operation 1504 to reduce resource consumption of the wearable device 110 by the execution of operations 308 and 310.

The processor 210 may execute operation 1506 on condition that the position of the at least one area is within the center area, or execute operation 1508 on condition that the position of the at least one area is outside the center area.

In operation 1506, the processor 210 may display the multimedia content as superimposed on the second image, based on identifying that the position of the at least one area is within the center area. For example, the processor 210 may obtain the second image by executing the operations 308 and 310, based on identifying that the position of the at least one area is within the center area, and display the multimedia content as superimposed on the second image.

In operation 1508, the processor 210 may display the multimedia content, based on identifying that the position of the at least one area is out of the center area. For example, the processor 210 may display the multimedia content without displaying the second image.

As described above, the wearable device 110 can adaptively execute, via the execution of operation 1504, obtaining the first image and the second image and displaying the multimedia content as superimposed on the second image. The wearable device 110 can optimize the efficiency of using resource of the wearable device 110 through such an adaptive execution.

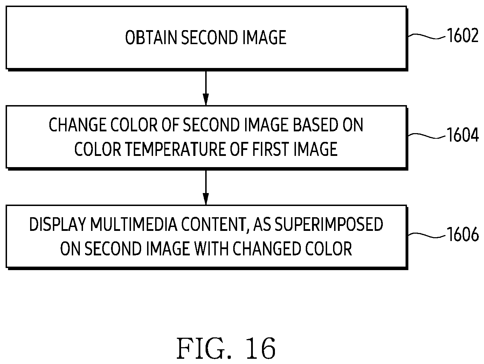

FIG. 16 is a flowchart illustrating a method of changing color of a second image. This method may be executed by the wearable device 110 shown in FIG. 1, the wearable device 110 shown in FIG. 2A or 2B, or the processor 210 shown in FIG. 2A. In certain embodiments, one or more of the operations shown in FIG. 16 may be omitted and/or one or more operations shown in FIG. 16 may be performed in a different order to that shown.

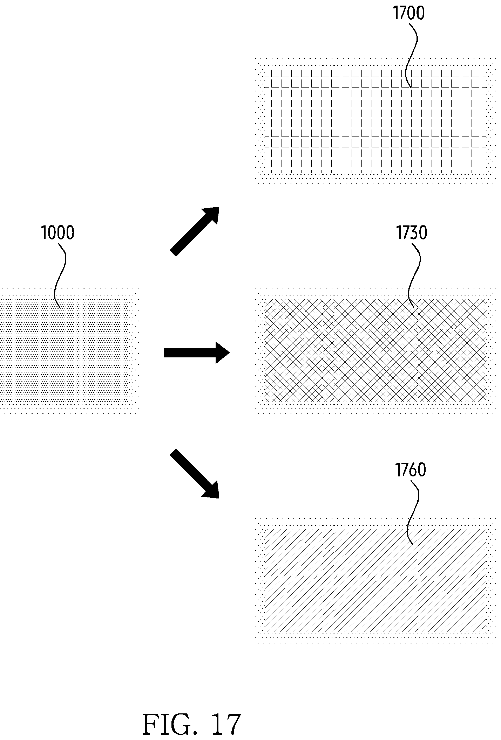

FIG. 17 shows exemplary second images with changed color.

Referring to FIG. 16, in operation 1602, the processor 210 obtains the second image. For example, operation 1602 may correspond to operation 310 of FIG. 3.

In operation 1604, the processor 210 may change color of the second image based on a color temperature of the first image. For example, since the second image is an image for compensating for a portion of the external environment (e.g., at least one area 670) to be viewed through the at least one area (e.g., at least one area 610), the processor 210 may estimate the color temperature of the portion of the external environment by identifying the color temperature of the first image in response to obtaining the first image. The processor 210 may change the color of the second image based on the estimated color temperature. For example, when the color temperature corresponds to the color temperature of blue light, the processor 210 may change the color of the second image by blending red with the second image. For example, when the color temperature corresponds to the color temperature of red light, the processor 210 may change the color of the second image by blending blue with the second image. However, the present disclosure is not limited thereto.

In operation 1606, the processor 210 may display the multimedia content as superimposed on the second image having the changed color. For example, the second image having the changed color, displayed through the display 250 may form the background layer. For example, the color of the background layer may be changed from the reference color by the second image having the changed color. For example, referring to FIG. 17, the color of the background layer 1000 may be changed based on the second image having the changed color. For example, when the color temperature is within a first range, the background layer 1000 having the reference color may be changed to the background layer 1700 having a first color distinguished from the reference color. For example, when the color temperature is within a second range distinct from the first range, the background layer 1000 having the reference color may be changed to a background layer 1730 having a second color distinguished from the first color and the reference color. For example, when the color temperature is within a third range distinct from the first range and the second range, the background layer 1000 having the reference color may be changed to a background layer 1760 having a third color distinguished from the first color, the second color, and the reference color. However, the present disclosure is not limited thereto.

As described above, the wearable device 110 can enhance the quality of the multimedia content displayed through the display 250, by adaptively changing the color of the second image according to the color temperature of the environment in which the wearable device 110 is located.

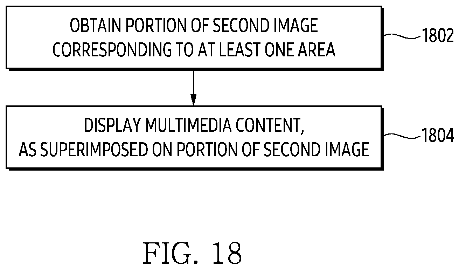

FIG. 18 is a flowchart illustrating a method of displaying the multimedia content as superimposed on a portion of the second image. This method may be executed by the wearable device 110 shown in FIG. 1, the wearable device 110 shown in FIG. 2A or 2B, or the processor 210 shown in FIG. 2A. In certain embodiments, one or more of the operations shown in FIG. 18 may be omitted and/or one or more operations shown in FIG. 18 may be performed in a different order to that shown.

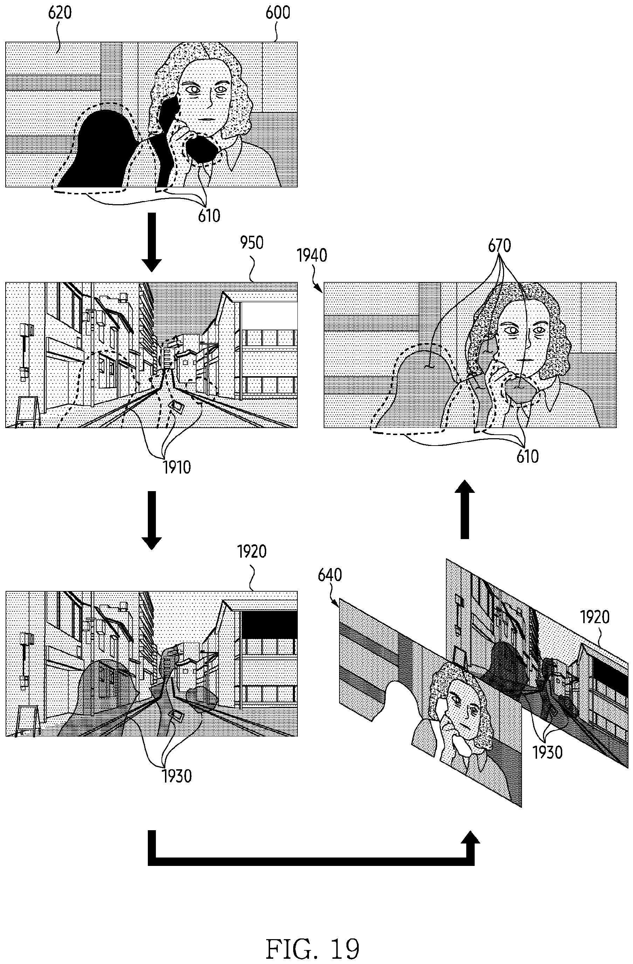

FIG. 19 shows exemplary multimedia content displayed as superimposed on a portion of the second image.

Referring to FIG. 18, in operation 1802, in response to obtaining the second image in operation 310, the processor 210 may obtain a portion of the second image corresponding to the at least one area. For example, referring to FIG. 19, the processor 210 may identify at least one area 610 within the multimedia content 600, and identify at least one area 1910 within the second image 950 corresponding to the at least one area 610. The processor 210 may obtain the at least one area 1910 as a portion of the second image 950.

Referring back to FIG. 18, in operation 1804, the processor 210 may display the multimedia content as superimposed on the obtained portion of the second image. For example, referring to FIG. 19, the processor 210 may provide a background layer 1920 by displaying at least one area 1910, which is the obtained portion of the second image 950. For example, the color of at least one area 1930 corresponding to the at least one area 1910 in the background layer 1920 may be the reference color. The processor 210 may, based on controlling the display 250 as in the state 640, display the multimedia content 600 as superimposed on the background layer 1920 provided by the at least one area 1910. The multimedia content 600 displayed as superimposed on the background layer 1920 may be provided via the display 250, as in a display state 1940. For example, in the display state 1940, the at least one area 670 in the environment 650 may not be visible through the at least one area 610, as in the display state 1100.

In an embodiment, operations 1802 and 1804 may be executed on condition that the multimedia content is a static image. For example, the processor 210 may execute operations 1802 to 1804 on condition that the multimedia content is a static image, or execute operations 310 and 312 on condition that the multimedia content is not a static image. However, the present disclosure is not limited thereto.

As described above, the wearable device 110 can adaptively obtain the portion of the second image, thereby reducing resource consumption by displaying the second image.

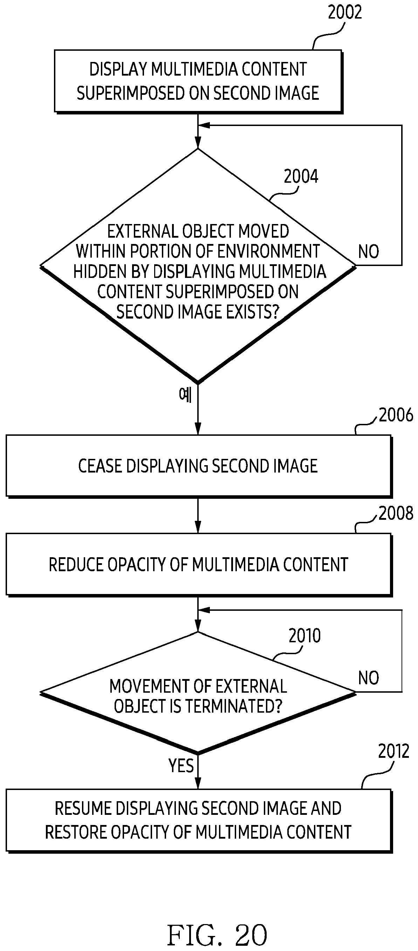

FIG. 20 is a flowchart illustrating a method of processing a second image and multimedia content superimposed on the second image according to movement of an external object. This method may be executed by the wearable device 110 shown in FIG. 1, the wearable device 110 shown in FIG. 2A or 2B, or the processor 210 shown in FIG. 2A. In certain embodiments, one or more of the operations shown in FIG. 20 may be omitted and/or one or more operations shown in FIG. 20 may be performed in a different order to that shown.

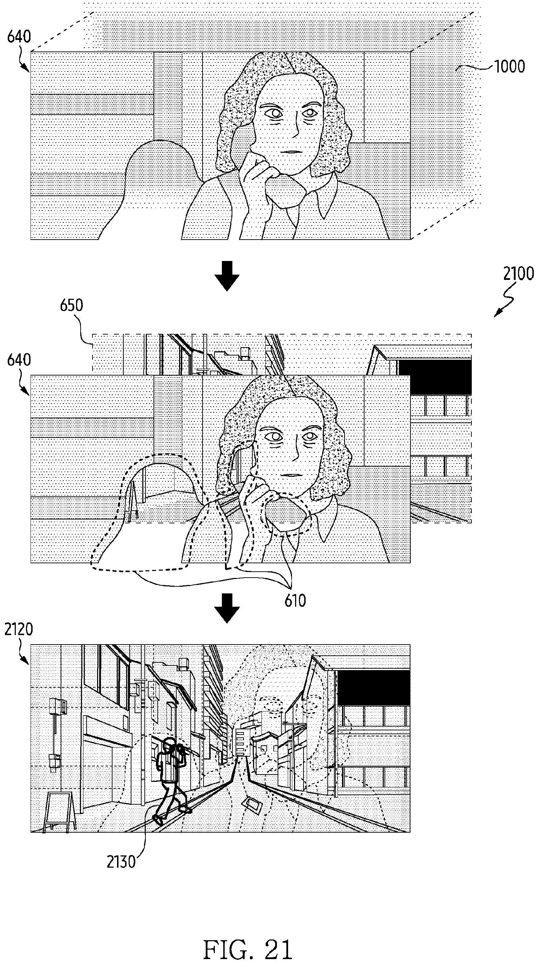

FIG. 21 illustrates an example of a method of processing a second image and multimedia content superimposed on the second image according to movement of an external object.

Referring to FIG. 20, in operation 2002, the processor 210 displays the multimedia content superimposed on the second image. For example, operation 2002 may correspond to operation 312 of FIG. 3.

In operation 2004, the processor 210 may identify whether there is an external object moving within a portion of the environment including the wearable device 110, which is hidden by displaying the multimedia content superimposed on the second image. For example, since the user wearing the wearable device 110 is not able to identify the movement of the external object owing to displaying of the multimedia content, the user may not recognize that he or she is in an unexpected situation. In order to prevent such unrecognized situation, the processor 210 may obtain images via the camera 230, while displaying the multimedia content superimposed on the second image, and based on the obtained images, may identify whether there exists such a moved or moving external object. The processor 210 may execute operation 2006 on condition that the (moved/moving) external object exists, or keep executing operation 2004 while displaying the multimedia content superimposed on the second image on condition that the external object does not exist.

In operation 2006, the processor 210 may cease displaying the second image based on identifying that the external object exists. For example, ceasing displaying the second image may cause formation or provision of the background layer to be terminated. For example, referring to FIG. 21, the processor 210 may identify that there exists the external object, while displaying the multimedia content 600 as superimposed on the background layer 1000 provided by displaying of the second image 950, based on controlling the display 250, as in the state 640. The processor 210 may cease displaying the second image 950 based on the identification. The background layer 1000 may be removed as in a state 2100 by cessation of displaying of second image 950, and the at least one area 670 (not shown in FIG. 21) in the environment 650 may be exposed through the at least one area 610.

Referring back to FIG. 20, in operation 2008, the processor 210 may reduce the opacity of the multimedia content based on identifying that there exists the external object. For example, the processor 210 may reduce the opacity of the multimedia content so that the user wearing the wearable device 110 can more easily recognize the external object. For example, referring to FIG. 21, the processor 210 may display the state 2120 by reducing the opacity of the multimedia content 600 in a state that the second image is removed (or in a state that the background layer 1000 is removed). In the display state 2120, the user may recognize the external object 2130 in moving.

Although FIG. 20 illustrates an example of executing operation 2008 after executing operation 2006, the operations 2006 and 2008 may be executed simultaneously, or the operation 2006 may be executed after operation 2008 is executed, or only one of operation 2006 and operation 2008 may be executed.

In operation 2010, the processor 210 may identify whether the movement of the external object is ceased, while ceasing to display the second image and(/or) displaying the multimedia content having the reduced opacity. For example, the processor 210 may identify whether the movement of the external object is ceased or whether the external object moves out of the field of view of the camera 230, based on the images obtained through the camera 230. The processor 210 may execute operation 2012 on condition that the movement of the external object is ceased, or maintain executing operation 2010 on condition that the movement of the external object is maintained.

In operation 2012, the processor 210 may resume displaying the second image and restore the opacity of the multimedia content, based on identifying that the movement of the external object is ceased. For example, the processor 210 may resume displaying the second image and restore the opacity of the multimedia content in order to enhance the quality of displaying of the multimedia content.

As described above, the wearable device 110 may execute operation 2004 so that the user wearing the wearable device 110 can recognize an external object moving around the wearable device 110 while displaying the multimedia content superimposed on the second image. For example, the wearable device 110 may execute operation 2004 so that the user can view the multimedia content in a safe environment.

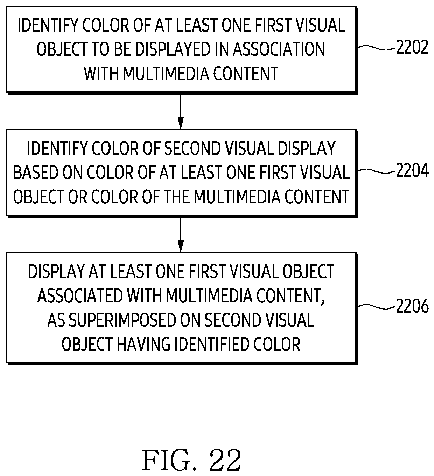

FIG. 22 is a flowchart illustrating a method of identifying color of a second visual object displayed under at least one first visual object associated with multimedia content. This method may be executed by the wearable device 110 shown in FIG. 1, the wearable device 110 shown in FIG. 2A or 2B, or the processor 210 shown in FIG. 2A. In certain embodiments, one or more of the operations shown in FIG. 22 may be omitted and/or one or more operations shown in FIG. 22 may be performed in a different order to that shown.

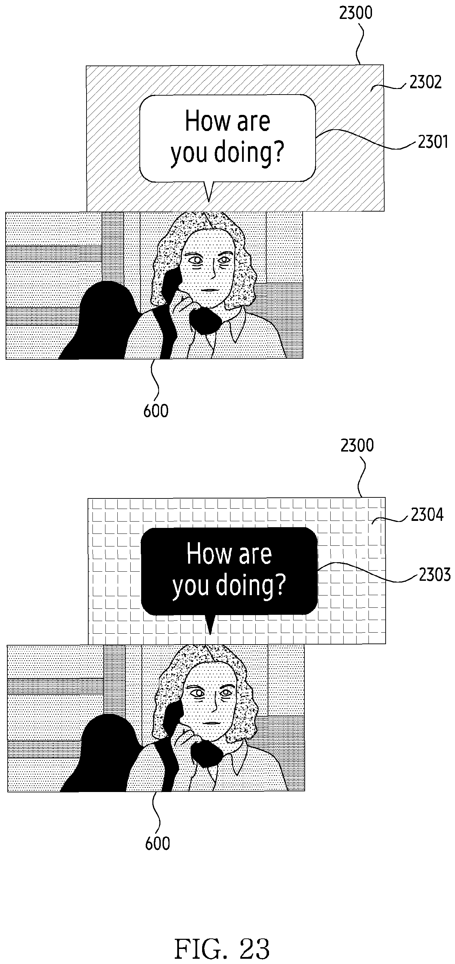

FIG. 23 illustrates exemplary second visual objects displayed under at least one first visual object associated with multimedia content.

Referring to FIG. 22, in operation 2202, the processor 210 may identify, while displaying the multimedia content superimposed on the second image, color of at least one first visual object to be displayed in association with the multimedia content. For example, the at least one first visual object may be visual information related to the multimedia content, but the present disclosure is not limited thereto. For example, the processor 210 may identify the color of the at least one first visual object to be displayed in association with the multimedia content, based on identifying an event related to the multimedia content while displaying the multimedia content.

In operation 2204, the processor 210 may identify the color of a second visual display to be displayed under the at least one first visual object, based on the color of the at least one first visual object or the color of the multimedia content. For example, the second visual object may be a visual object displayed under the at least one first visual object to enhance the quality of displaying of the at least one first visual object. For example, the second visual object may be a background of the at least one first visual object. However, the present disclosure is not limited thereto.

In an embodiment, the processor 210 may identify the color of the second visual object based on the color of the multimedia content amongst the at least one first visual object and the color of the multimedia content, on condition that the at least one first visual object has only at least one specified color (this "specified color" may be unrelated to the "specified color" described in combination with at least one area within a multimedia content previously), and identify the color of the second visual object based on the color of the at least one first visual object amongst the at least one first visual object and the color of the multimedia content, on condition that the at least one first visual object has a different color distinguished from the at least one specified color. For example, the at least one specified color may be a color in which visibility of the at least one first visual object is ensured, independently (or irrespectively) of which color the color of the second visual object is identified as. For example, the at least one specified color may be black and white. However, the present disclosure is not limited thereto. For example, when the visibility of the at least one first visual object having only the at least one specified color is ensured, the processor 210 may identify the color of the second visual object based on the color of the multimedia content, for harmonizing with the multimedia content. For example, when the visibility of the at least one first visual object having the different color is not ensured, the processor 210 may identify the color of the second visual object as a complementary color to the color of the at least one first visual object, in order to enhance the visibility of the at least one first visual object. For example, referring to FIG. 23, in response to identifying an event for displaying at least one first visual object 2301 having only the at least one specified color, the processor 210 may identify the color of the second visual object 2300 to be displayed under the at least one first visual object 2301, as a color 2302 identified based on the color of the multimedia content 600. For example, in response to identifying an event for displaying at least one first visual object 2303 having the different color, the processor 210 may identify the color of the second visual object 2300 to be displayed under the at least one first visual object 2303, as a color 2304 identified based on the color of the at least one first visual object 2303.

Referring again to FIG. 22, in operation 2206, the processor 210 may display the at least one first visual object associated with the multimedia content, as superimposed on the second visual object having the color identified in operation 2204.

As described above, the wearable device 110 may, based on detecting an event for displaying the at least one first visual object related to the multimedia content while displaying the multimedia content as superimposed on the second image, identify the color of the second visual object to be displayed under the at least one first visual object based on the color of the at least one first visual object, or identify the color of the second visual object to be displayed under the at least one first visual object based on the color of the multimedia content, thereby enhancing the visibility of the at least one first visual object or displaying the second visual object in harmony with the multimedia content.

An electronic device, a method, and a non-transitory computer-readable storage medium according to an embodiment can enhance the quality of the multimedia content by displaying multimedia content superimposed on a second image in which a first image obtained through the camera is converted in color.

As described above, a wearable device may comprise at least one camera, a display, a memory configured to store instructions, and a processor. The processor may be configured to execute the instructions to obtain a user request for displaying multimedia content in a display area of the display. The processor may be configured to execute the instructions to, based on the user request, identify whether brightness of an environment around the wearable device is greater than or equal to reference brightness. The processor may be configured to execute the instructions to, based on the brightness greater than or equal to the reference brightness, identify whether the multimedia content includes at least one area having specified color. The processor may be configured to execute the instructions to, based on the multimedia content including the at least one area, generate a first image for a portion of the environment corresponding to a position in which the multimedia content is to be displayed, via the at least one camera. The processor may be configured to execute the instructions to generate a second image in which color of the first image is converted. The processor may be configured to execute the instructions to display, via the display, the multimedia content, as superimposed on the second image displayed in the position.

According to an embodiment, the color(s) of the first image is(are) inverted in the second image.

According to an embodiment, the processor may be configured to execute the instructions to, based on the brightness less than the reference brightness, refrain from identifying whether the multimedia content includes the at least one area.

According to an embodiment, the processor may be configured to execute the instructions to, based on the multimedia content not including the at least one area, refrain from generating the first image and the second image.

According to an embodiment, the processor may be configured to execute the instructions to, in response to the user request, identify the brightness of the environment, based on data indicating brightness of an image obtained via the at least one camera. According to an embodiment, the processor may be configured to execute the instructions to identify whether the brightness of the environment, identified based on the data, is greater than or equal to the reference brightness.

According to an embodiment, the processor may further comprise an illuminance sensor. According to an embodiment, the processor may be configured to execute the instructions to, in response to the user request, identify the brightness of the environment, further (or alternatively) based on data obtained via the illuminance sensor. According to an embodiment, the processor may be configured to execute the instructions to identify whether the brightness of the environment identified further (or alternatively) based on the data obtained via the illuminance sensor is greater than or equal to the reference brightness.

According to an embodiment, the processor may be configured to execute the instructions to identify a first virtual plane defined on a virtual three-dimensional (3D) space, based on the first image. According to an embodiment, the processor may be configured to execute the instructions to render the second image on the first virtual plane. According to an embodiment, the processor may be configured to execute the instructions to render the multimedia content on a second virtual plane defined on the virtual three-dimensional space and distinguished from the first virtual plane. According to an embodiment, the processor may be configured to execute the instructions to display the multimedia content as superimposed on the second image, by projecting the rendered second image and the rendered multimedia content onto a third virtual plane defined on the virtual 3D space, the third virtual plane corresponding to the display area of the display.

According to an embodiment, the processor may be further configured to execute the instructions to, based on the brightness less than the reference brightness and/or the multimedia content not including the at least one area, display the multimedia content by emitting, from among first light emitting elements for the at least one area and second light emitting elements for at least another area of the multimedia content having color distinct from the specified color, light from the second light emitting elements.

According to an embodiment, the processor may be further configured to execute the instructions to adjust opacity of the multimedia content. According to an embodiment, the processor may be further configured to execute the instructions to display, via the display, the multimedia content with the adjusted opacity, as superimposed on the second image displayed in the position.

According to an embodiment, the processor may be further configured to execute the instructions to change color of the second image, based on color temperature of the first image. According to an embodiment, the processor may be further configured to execute the instructions to display the multimedia content, as superimposed on the second image with the changed color.

According to an embodiment, the processor may be further configured to execute the instructions to, after the second image is generated, extract a portion of the second image corresponding to the at least one area. According to an embodiment, the processor may be further configured to execute the instructions to display the multimedia content, as superimposed on the extracted portion of the second image displayed in at least one position in the display area corresponding to the at least one area. According to an embodiment, the processor may be further configured to execute the instructions to display the at least one area of the multimedia content, as superimposed on the extracted portion of the second image displayed in at least one position in the display area corresponding to the at least one area.

According to an embodiment, the processor may be configured to execute the instructions to, based on the user request, identify whether the multimedia content is a static image. According to an embodiment, the processor may be further configured to execute the instructions to, based on the multimedia content that is a static image, display the multimedia content, as superimposed on the extracted portion of the second image. According to an embodiment, the processor may be further configured to execute the instructions to, based on the multimedia content that is not a static image, display the multimedia content, as superimposed on the second image.

According to an embodiment, the processor may be further configured to execute the instructions to, based on at least one image obtained via the at least one camera while the multimedia content superimposed on the second image is displayed, identify whether there exists an external object moving in a portion of the environment hidden by displaying the multimedia content superimposed on the second image. According to an embodiment, the processor may be further configured to execute the instructions to, based on the identification of the external object, cease displaying the second image. According to an embodiment, displaying of the multimedia content may be maintained while displaying of the second image is ceased.

According to an embodiment, the processor may be further configured to execute the instructions to, based on the identification of the external object, decrease opacity of the multimedia content displayed via the display. For example, the external object moving within the portion of the environment may be viewed through the display area, according to the decrease of the opacity of the multimedia content.

According to an embodiment, the processor may be further configured to execute the instructions to, based on at least one image obtained via the at least one camera while ceasing to display the second image and displaying the multimedia content, identify whether the movement of the external object is terminated. According to an embodiment, the processor may be further configured to execute the instructions to, based on termination of the movement of the external object, display the multimedia content superimposed on the second image by resuming displaying the second image in the position.

According to an embodiment, the user request may comprise an input for executing a software application used to play the multimedia content.

According to an embodiment, the processor may be further configured to execute the instructions to, while displaying the multimedia content superimposed on the second image, identify color of at least one first visual object to be displayed in association with the multimedia content. According to an embodiment, the processor may be further configured to execute the instructions to identify, based on color of the at least one first visual object or color of the multimedia content, color of a second visual object to be displayed under the at least one first visual object. According to an embodiment, the processor may be further configured to execute the instructions to display the at least one first visual object associated with the multimedia content, as superimposed on the second visual object with the identified color.

According to an embodiment, the processor may be configured to execute the instructions to, on condition that the at least one first visual object has only at least one specified color, identify the color of the second visual object, based on the color of the multimedia content from among the color of the at least one first visual object and the color of the multimedia content. According to an embodiment, the processor may be configured to execute the instructions to, on condition that the at least one first visual object has another color distinct from the at least one specified color, identify the color of the second visual object, based on the color of the at least one first visual object from among the color of the at least one first visual object and the color of the multimedia content.

According to an embodiment, the processor may be configured to execute the instructions to, based on the multimedia content including the at least one area, identify a ratio of size of the at least one area to size of the multimedia content. According to an embodiment, the processor may be configured to execute the instructions to, based on the ratio greater than or equal to a reference ratio, display the multimedia content superimposed on the second image. According to an embodiment, the processor may be configured to execute the instructions to, based on the ratio less than the reference ratio, refrain from generating the first image and the second image and display the multimedia content without displaying of the second image.

According to an embodiment, intensity of light passing through the at least one area may be greater than or equal to reference intensity, while displaying the multimedia content that is not superimposed on the second image, and may be less than the reference intensity, while displaying the multimedia content superimposed on the second image.

According to an embodiment, the size of the second image may be greater than or equal to the size of the multimedia content.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

## Claims

1. A wearable device (110) comprising:
at least one camera (230);
a display (250);
a memory (220) configured to store instructions; and
a processor (210),
wherein the instructions, when executed by the processor, cause the wearable device to:
receive (302) an input for displaying a multimedia content (600) in a display area (115) of the display;
based on receiving the input, identify (304) whether a brightness of an environment (650) around the wearable device is greater than or equal to a reference brightness;
based on identifying that the brightness is greater than or equal to the reference brightness, identify (306) whether the multimedia content includes at least one area (610) having a specified color;
based on identifying that the multimedia content includes the at least one area, obtain (308) a first image for a portion of the environment corresponding to a position in which the multimedia content is to be displayed, via the at least one camera;
obtain (310) a second image in which a color of the first image is converted; and
display (312), via the display, the multimedia content, as superimposed on the second image displayed in the position.

2. The wearable device of claim 1, wherein the instructions, when executed by the processor (210), further cause the wearable device to:
in response to identifying that the brightness is less than the reference brightness, refrain from identifying whether the multimedia content includes the at least one area and display (314), via the display, the multimedia content; and/or
in response to identifying that the multimedia content does not include the at least one area, refrain from obtaining the first image and the second image and display (316), via the display, the multimedia content

3. The wearable device of claim 1, wherein the instructions, when executed by the processor (210), cause the wearable device to:
in response to receiving the input, identify the brightness of the environment, based on data indicating brightness of an image obtained via the at least one camera; and
identify whether the identified brightness is greater than or equal to the reference brightness.

4. The wearable device of claim 3, further comprising:
an illuminance sensor,
wherein the instructions, when executed by the processor (210), cause the wearable device to:
in response to receiving the input, identify the brightness of the environment, further based on data obtained via the illuminance sensor.

5. The wearable device of claim 1, wherein the instructions, when executed by the processor (210), cause the wearable device to:
identify a first virtual plane positioned on a virtual three-dimensional (3D) space, based on the first image;
render the second image on the first virtual plane;
render the multimedia content on a second virtual plane; and
display the multimedia content as superimposed on the second image, by projecting the rendered second image and the rendered multimedia content onto a third virtual plane on the virtual 3D space corresponding to the display area of the display.

6. The wearable device of claim 1, wherein one or more of:
wherein the instructions, when executed by the processor (210), further cause the wearable device to adjust opacity of the multimedia content, and display, via the display, the multimedia content with the adjusted opacity, as superimposed on the second image displayed in the position; and
wherein the instructions, when executed by the processor (210), cause the wearable device to change (1604) color of the second image, based on color temperature of the first image, and display (1606) the multimedia content, as superimposed on the second image with the changed color.

7. The wearable device of claim 1, wherein the instructions, when executed by the processor (210), further cause the wearable device to:
after obtaining the second image, obtain (1802) a portion of the second image corresponding to the at least one area; and
display (1804) the multimedia content, as superimposed on the portion of the second image displayed in at least one position in the display area corresponding to the at least one area.

8. The wearable device of claim 7, wherein the instructions, when executed by the processor (210), cause the wearable device to:
based on receiving the input, identify whether the multimedia content is a static image;
based on identifying that the multimedia content is a static image, display the multimedia content, as superimposed on the portion of the second image; and
based on identifying that the multimedia content is not a static image, display the multimedia content, as superimposed on the second image.

9. The wearable device of claim 1, wherein the instructions, when executed by the processor (210), further cause the wearable device to:
identify (2004), based on at least one image obtained via the at least one camera while displaying the multimedia content superimposed on the second image, whether an external object moving in a portion of the environment hidden by displaying the multimedia content superimposed on the second image exists; and
based on identifying that the external object exists, cease (2006) to display the second image and/or decrease (2008) opacity of the multimedia content displayed via the display.

10. The wearable device of claim 9, wherein the instructions, when executed by the processor (210), further cause the wearable device to:
identify (2010), based on at least one image obtained via the at least one camera while ceasing to display the second image and displaying the multimedia content, whether the movement of the external object is terminated or not; and
based on identifying that the movement of the external object is terminated, display (2012) the multimedia content superimposed on the second image by resuming to display the second image in the position.

11. The wearable device of claim 1, wherein the instructions, when executed by the processor (210), further cause the wearable device to:
while displaying the multimedia content superimposed on the second image, identify (2202) color of at least one first visual object to be displayed as associated with the multimedia content;
identify (2204), based on the color of the at least one first visual object or color of the multimedia content, color of a second visual object to be displayed under the at least one first visual object; and
display (2206) the at least one first visual object associated with the multimedia content, as superimposed on the second visual object with the identified color.

12. The wearable device of claim 11, wherein the instructions, when executed by the processor (210), cause the wearable device to:
on condition that the at least one first visual object has only at least one specified color, identify the color of the second visual object, based on the color of the multimedia content from among the color of the at least one first visual object and the color of the multimedia content; and
on condition that the at least one first visual object has another color distinct from the at least one specified color, identify the color of the second visual object, based on the color of the at least one first visual object from among the color of the at least one first visual object and the color of the multimedia content.

13. The wearable device of claim 1, wherein the instructions, when executed by the processor (210), cause the wearable device to:
based on identifying that the multimedia content includes the at least one area, identify ratio of size of the at least one area to size of the multimedia content;
based on identifying that the ratio is greater than or equal to a reference ratio, display (1406) the multimedia content superimposed on the second image; and
based on identifying that the ratio is less than the reference ratio, refrain from obtaining the first image and the second image and display (1408) the multimedia content.

14. The wearable device of claim 1, wherein the instructions, when executed by the processor (210), cause the wearable device to:
before display of the multimedia content as superimposed on the second image, display, via the display, the multimedia content in the position; and
wherein intensity of light passing through the at least one area is:
greater than or equal to a reference intensity while the multimedia content is displayed without being superimposed on the second image; and
less than the reference intensity while the multimedia content is being displayed superimposed on the second image.

15. A method for operating a wearable device (110) comprising at least one camera (230) and a display (250), the method comprising:
receiving (302) an input for displaying a multimedia content (600) in a display area (115) of the display;
based on receiving the input, identifying (304) whether a brightness of an environment (650) around the wearable device is greater than or equal to a reference brightness;
based on identifying that the brightness is greater than or equal to the reference brightness, identifying (306) whether the multimedia content includes at least one area (610) having a specified color;
based on identifying that the multimedia content includes the at least one area, obtaining (308) a first image for a portion of the environment corresponding to a position in which the multimedia content is to be displayed, via the at least one camera;
obtaining (310) a second image in which a color of the first image is converted; and
displaying (312), via the display, the multimedia content, as superimposed on the second image displayed in the position.

## Patentansprüche

1. Wearable-Vorrichtung (110), umfassend:
mindestens eine Kamera (230);
eine Anzeige (250);
einen Speicher (220), der dazu konfiguriert ist, Anweisungen zu speichern; und
einen Prozessor (210),
wobei die Anweisungen, wenn sie durch den Prozessor ausgeführt werden, die Wearable-Vorrichtung zu Folgendem veranlassen:
Empfangen (302) einer Eingabe zum Anzeigen eines Multimediainhalts (600) in einem Anzeigebereich (115) der Anzeige;
basierend auf dem Empfangen der Eingabe, Identifizieren (304), ob eine Helligkeit einer Umgebung (650) um die Wearable-Vorrichtung herum größer oder gleich einer Referenzhelligkeit ist;
basierend auf dem Identifizieren, dass die Helligkeit größer oder gleich der Referenzhelligkeit ist, Identifizieren (306), ob der Multimediainhalt mindestens einen Bereich (610) enthält, der eine spezifizierte Farbe aufweist;
basierend auf dem Identifizieren, dass der Multimediainhalt den mindestens einen Bereich enthält, Erlangen (308) eines ersten Bildes für einen Teil der Umgebung, der einer Position entspricht, an der der Multimediainhalt anzuzeigen ist, über die mindestens eine Kamera;
Erlangen (310) eines zweiten Bildes, in dem eine Farbe des ersten Bildes umgewandelt ist; und
Anzeigen (312) des Multimediainhalts als dem zweiten Bild, das an der Position angezeigt wird, überlagert über die Anzeige.

2. Wearable-Vorrichtung nach Anspruch 1, wobei die Anweisungen, wenn sie durch den Prozessor (210) ausgeführt werden, die Wearable-Vorrichtung ferner zu Folgendem veranlassen:
als Reaktion auf das Identifizieren, dass die Helligkeit geringer als die Referenzhelligkeit ist, Unterlassen zu identifizieren, ob der Multimediainhalt den mindestens einen Bereich enthält, und Anzeigen (314) des Multimediainhalts über die Anzeige; und/oder
als Reaktion auf das Identifizieren, dass der Multimediainhalt den mindestens einen Bereich nicht enthält, Unterlassen, das erste Bild und das zweite Bild zu erlangen, und Anzeigen (316) des Multimediainhalts über die Anzeige.

3. Wearable-Vorrichtung nach Anspruch 1, wobei die Anweisungen, wenn sie durch den Prozessor (210) ausgeführt werden, die Wearable-Vorrichtung zu Folgendem veranlassen:
als Reaktion auf das Empfangen der Eingabe, Identifizieren der Helligkeit der Umgebung basierend auf Daten, die eine Helligkeit eines über die mindestens eine Kamera erlangten Bildes angeben; und
Identifizieren, ob die identifizierte Helligkeit größer oder gleich der Referenzhelligkeit ist.

4. Wearable-Vorrichtung nach Anspruch 3, ferner umfassend:
einen Beleuchtungsstärkensensor,
wobei die Anweisungen, wenn sie durch den Prozessor (210) ausgeführt werden, die Wearable-Vorrichtung zu Folgendem veranlassen:
als Reaktion auf das Empfangen der Eingabe, Identifizieren der Helligkeit der Umgebung, ferner basierend auf Daten, die über den Beleuchtungsstärkensensor erlangt werden.

5. Wearable-Vorrichtung nach Anspruch 1, wobei die Anweisungen, wenn sie durch den Prozessor (210) ausgeführt werden, die Wearable-Vorrichtung zu Folgendem veranlassen:
Identifizieren einer ersten virtuellen Ebene, die in einem virtuellen dreidimensionalen (3D-)Raum positioniert ist, basierend auf dem ersten Bild;
Rendern des zweiten Bildes auf der ersten virtuellen Ebene;
Rendern des Multimediainhalts auf einer zweiten virtuellen Ebene; und
Anzeigen des Multimediainhalts als dem zweiten Bild überlagert, durch Projizieren des gerenderten zweiten Bildes und des gerenderten Multimediainhalts auf eine dritte virtuelle Ebene in dem virtuellen 3D-Raum, die dem Anzeigebereich der Anzeige entspricht.

6. Wearable-Vorrichtung nach Anspruch 1, wobei eines oder mehrere von Folgenden gilt:
wobei die Anweisungen, wenn sie durch den Prozessor (210) ausgeführt werden, ferner die Wearable-Vorrichtung zum Anpassen einer Opazität des Multimediainhalts und Anzeigen des Multimediainhalts mit der angepassten Opazität als dem zweiten Bild, das an der Position angezeigt wird, überlagert über die Anzeige veranlassen; und
wobei die Anweisungen, wenn sie durch den Prozessor (210) ausgeführt werden, die Wearable-Vorrichtung zum Ändern (1604) einer Farbe des zweiten Bildes basierend auf einer Farbtemperatur des ersten Bildes und Anzeigen (1606) des Multimediainhalts als dem zweiten Bild mit der geänderten Farbe überlagert veranlassen.

7. Wearable-Vorrichtung nach Anspruch 1, wobei die Anweisungen, wenn sie durch den Prozessor (210) ausgeführt werden, die Wearable-Vorrichtung ferner zu Folgendem veranlassen:
nach dem Erlangen des zweiten Bildes, Erlangen (1802) eines Teils des zweiten Bildes, der dem mindestens einen Bereich entspricht; und
Anzeigen (1804) des Multimediainhalts, als dem Teil des zweiten Bilds überlagert, der an mindestens einer Position in dem Anzeigebereich angezeigt wird, die dem mindestens einen Bereich entspricht.

8. Wearable-Vorrichtung nach Anspruch 7, wobei die Anweisungen, wenn sie durch den Prozessor (210) ausgeführt werden, die Wearable-Vorrichtung zu Folgendem veranlassen:
basierend auf dem Empfangen der Eingabe, Identifizieren, ob der Multimediainhalt ein statisches Bild ist;
basierend auf dem Identifizieren, dass der Multimediainhalt ein statisches Bild ist, Anzeigen des Multimediainhalts als dem Teil des zweiten Bildes überlagert; und
basierend auf dem Identifizieren, dass der Multimediainhalt kein statisches Bild ist, Anzeigen des Multimediainhalts als dem zweiten Bild überlagert.

9. Wearable-Vorrichtung nach Anspruch 1, wobei die Anweisungen, wenn sie durch den Prozessor (210) ausgeführt werden, die Wearable-Vorrichtung ferner zu Folgendem veranlassen:
Identifizieren (2004) basierend auf mindestens einem Bild, das über die mindestens eine Kamera erlangt wurde, während der Multimediainhalt als dem zweiten Bild überlagert angezeigt wird, ob ein externes Objekt existiert, das sich in einem Teil der Umgebung bewegt, der durch das Anzeigen des Multimediainhalts als dem zweiten Bild überlagert verborgen ist; und
basierend auf dem Identifizieren, dass das externe Objekt existiert, Einstellen (2006) des Anzeigens des zweiten Bildes und/oder Verringern (2008) der Opazität des über die Anzeige angezeigten Multimediainhalts.

10. Wearable-Vorrichtung nach Anspruch 9, wobei die Anweisungen, wenn sie durch den Prozessor (210) ausgeführt werden, die Wearable-Vorrichtung ferner zu Folgendem veranlassen:
Identifizieren (2010), basierend auf mindestens einem Bild, das über die mindestens eine Kamera erlangt wurde, während das Anzeigen des zweiten Bilds eingestellt ist und der Multimediainhalt angezeigt wird, ob die Bewegung des externen Objekts beendet ist oder nicht; und
basierend auf dem Identifizieren, dass die Bewegung des externen Objekts beendet ist, Anzeigen (2012) des Multimediainhalts als dem zweiten Bild überlagert durch Fortsetzen des Anzeigens des zweiten Bildes an der Position.

11. Wearable-Vorrichtung nach Anspruch 1, wobei die Anweisungen, wenn sie durch den Prozessor (210) ausgeführt werden, die Wearable-Vorrichtung ferner zu Folgendem veranlassen:
während des Anzeigens des Multimediainhalts als dem zweiten Bild überlagert, Identifizieren (2202) einer Farbe mindestens eines ersten visuellen Objekts, das als mit dem Multimediainhalt verknüpft anzuzeigen ist;
Identifizieren (2204), basierend auf der Farbe des mindestens einen ersten visuellen Objekts oder der Farbe des Multimediainhalts, einer Farbe eines zweiten visuellen Objekts, das unter dem mindestens einen ersten visuellen Objekt anzuzeigen ist; und
Anzeigen (2206) des mindestens einen ersten visuellen Objekts, das mit dem Multimediainhalt verknüpft ist, als dem zweiten visuellen Objekt überlagert mit der identifizierten Farbe.

12. Wearable-Vorrichtung nach Anspruch 11, wobei die Anweisungen, wenn sie durch den Prozessor (210) ausgeführt werden, die Wearable-Vorrichtung zu Folgendem veranlassen:
unter der Voraussetzung, dass das mindestens eine erste visuelle Objekt nur mindestens eine spezifizierte Farbe aufweist, Identifizieren der Farbe des zweiten visuellen Objekts basierend auf der Farbe des Multimediainhalts aus der Farbe des mindestens einen ersten visuellen Objekts und der Farbe des Multimediainhalts; und
unter der Voraussetzung, dass das mindestens eine erste visuelle Objekt eine weitere Farbe aufweist, die sich von der mindestens einen spezifizierten Farbe unterscheidet, Identifizieren der Farbe des zweiten visuellen Objekts basierend auf der Farbe des mindestens einen ersten visuellen Objekts aus der Farbe des mindestens einen ersten visuellen Objekts und der Farbe des Multimediainhalts.

13. Wearable-Vorrichtung nach Anspruch 1, wobei die Anweisungen, wenn sie durch den Prozessor (210) ausgeführt werden, die Wearable-Vorrichtung zu Folgendem veranlassen:
basierend auf dem Identifizieren, dass der Multimediainhalt den mindestens einen Bereich enthält, Identifizieren eines Größenverhältnisses des mindestens einen Bereichs zu einer Größe des Multimediainhalts;
basierend auf dem Identifizieren, dass das Verhältnis größer oder gleich einem Referenzverhältnis ist, Anzeigen (1406) des Multimediainhalts als dem zweiten Bild überlagert; und
basierend auf dem Identifizieren, dass das Verhältnis kleiner als das Referenzverhältnis ist, Unterlassen, das erste Bild und das zweiten Bild zu erlangen, und Anzeigen (1408) des Multimediainhalts.

14. Wearable-Vorrichtung nach Anspruch 1, wobei die Anweisungen, wenn sie durch den Prozessor (210) ausgeführt werden, die Wearable-Vorrichtung zu Folgendem veranlassen:
vor der Anzeige des Multimediainhalts als dem zweiten Bild überlagert, Anzeigen des Multimediainhalts in der Position über die Anzeige; und
wobei eine Intensität des durch den mindestens einen Bereich hindurchtretenden Lichts:
größer oder gleich einer Referenzintensität ist, während der Multimediainhalt angezeigt wird, ohne dem zweiten Bild überlagert zu sein; und
geringer als die Referenzintensität ist, während der Multimediainhalt als dem zweiten Bild überlagert angezeigt wird.

15. Verfahren zum Betreiben einer Wearable-Vorrichtung (110), die mindestens eine Kamera (230) und eine Anzeige (250) umfasst, wobei das Verfahren Folgendes umfasst:
Empfangen (302) einer Eingabe zum Anzeigen eines Multimediainhalts (600) in einem Anzeigebereich (115) der Anzeige;
basierend auf dem Empfangen der Eingabe, Identifizieren (304), ob eine Helligkeit einer Umgebung (650) um die Wearable-Vorrichtung herum größer oder gleich einer Referenzhelligkeit ist;
basierend auf dem Identifizieren, dass die Helligkeit größer oder gleich der Referenzhelligkeit ist, Identifizieren (306), ob der Multimediainhalt mindestens einen Bereich (610) enthält, der eine spezifizierte Farbe aufweist;
basierend auf dem Identifizieren, dass der Multimediainhalt den mindestens einen Bereich enthält, Erlangen (308) eines ersten Bildes für einen Teil der Umgebung, der einer Position entspricht, an der der Multimediainhalt anzuzeigen ist, über die mindestens eine Kamera;
Erlangen (310) eines zweiten Bildes, in dem eine Farbe des ersten Bildes umgewandelt ist; und
Anzeigen (312) des Multimediainhalts als dem zweiten Bild, das an der Position angezeigt wird, überlagert über die Anzeige.

## Revendications

1. Dispositif portable (110) comprenant :
au moins une caméra (230) ;
un dispositif d'affichage (250) ;
une mémoire (220) configurée pour stocker des instructions ; et
un processeur (210),
lesdites instructions, lorsqu'elles sont exécutées par le processeur, amenant le dispositif portable à :
recevoir (302) une entrée pour afficher un contenu multimédia (600) dans une zone d'affichage (115) du dispositif d'affichage ;
sur la base de la réception de l'entrée, identifier (304) si une luminosité d'un environnement (650) autour du dispositif portable est supérieure ou égale à une
luminosité de référence ;
sur la base de l'identification que la luminosité est supérieure ou égale à la luminosité de référence, identifier (306) si le contenu multimédia comprend au moins une zone (610) comportant une couleur spécifiée ;
sur la base de l'identification que le contenu multimédia comprend la au moins une zone, obtenir (308) une première image pour une partie de l'environnement correspondant à une position dans laquelle le contenu multimédia doit être affiché, par l'intermédiaire de la au moins une caméra ;
obtenir (310) une seconde image dans laquelle une couleur de la première image est convertie ; et
afficher (312), par l'intermédiaire du dispositif d'affichage, le contenu multimédia, de façon à ce qu'il soit superposé à la seconde image affichée dans la position.

2. Dispositif portable de la revendication 1, lesdites instructions, lorsqu'elles sont exécutées par le processeur (210), amenant en outre le dispositif portable à :
en réponse à l'identification que la luminosité est inférieure à la luminosité de référence, s'abstenir d'identifier si le contenu multimédia comprend la au moins une zone et afficher (314), par l'intermédiaire du dispositif d'affichage, le contenu multimédia ; et/ou
en réponse à l'identification que le contenu multimédia ne comprend pas la au moins une zone, s'abstenir d'obtenir la première image et la seconde image et afficher (316),
par l'intermédiaire du dispositif d'affichage, le contenu multimédia.

3. Dispositif portable de la revendication 1, lesdites instructions, lorsqu'elles sont exécutées par le processeur (210), amenant le dispositif portable à :
en réponse à la réception de l'entrée, identifier la luminosité de l'environnement, sur la base de données indiquant la luminosité d'une image obtenue par l'intermédiaire de la au moins une caméra ; et
identifier si la luminosité identifiée est supérieure ou égale à la luminosité de référence.

4. Dispositif portable de la revendication 3, comprenant en outre :
un capteur d'éclairement,
lesdites instructions, lorsqu'elles sont exécutées par le processeur (210), amenant le dispositif portable à :
en réponse à la réception de l'entrée, identifier la luminosité de l'environnement, en outre sur la base de données obtenues par l'intermédiaire du capteur d'éclairement.

5. Dispositif portable de la revendication 1, lesdites instructions, lorsqu'elles sont exécutées par le processeur (210), amenant le dispositif portable à :
identifier un premier plan virtuel positionné sur un espace tridimensionnel virtuel (3D), sur la base de la première image ;
restituer la seconde image sur le premier plan virtuel ;
restituer le contenu multimédia sur un deuxième plan virtuel ; et
afficher le contenu multimédia de façon à ce qu'il soit superposé à la seconde image, en projetant la seconde image restituée et le contenu multimédia restitué sur un troisième plan virtuel sur l'espace 3D virtuel correspondant à la zone d'affichage du dispositif d'affichage.

6. Dispositif portable de la revendication 1, un ou plusieurs parmi :
lesdites instructions, lorsqu'elles sont exécutées par le processeur (210), amenant en outre le dispositif portable à régler l'opacité du contenu multimédia, et à afficher, par l'intermédiaire du dispositif d'affichage, le contenu multimédia avec l'opacité réglée, de façon à ce qu'il soit superposé à la seconde image affichée dans la position ; et
lesdites instructions, lorsqu'elles sont exécutées par le processeur (210), amenant le dispositif portable à changer (1604) une couleur de la seconde image, sur la base de la température de couleur de la première image, et à afficher (1606) le contenu multimédia, de façon à ce qu'il soit superposé à la seconde image avec la couleur changée.

7. Dispositif portable de la revendication 1, lesdites instructions, lorsqu'elles sont exécutées par le processeur (210), amenant en outre le dispositif portable à :
après l'obtention de la seconde image, obtenir (1802) une partie de la seconde image correspondant à la au moins une zone ; et
afficher (1804) le contenu multimédia, de façon à ce qu'il soit superposé à la partie de la seconde image affichée dans au moins une position dans la zone d'affichage correspondant à la au moins une zone.

8. Dispositif portable de la revendication 7, lesdites instructions, lors qu'elles sont exécutées par le processeur (210), amenant le dispositif portable à :
sur la base de la réception de l'entrée, identifier si le contenu multimédia est une image statique ;
sur la base de l'identification que le contenu multimédia est une image statique, afficher le contenu multimédia, de façon ce qu'il soit superposé à la partie de la seconde image ; et
sur la base de l'identification que le contenu multimédia n'est pas une image statique, afficher le contenu multimédia, de façon à ce qu'il soit superposé à la seconde image.

9. Dispositif portable de la revendication 1, lesdites instructions, lorsqu'elles sont exécutées par le processeur (210), amenant en outre le dispositif portable à :
identifier (2004), sur la base d'au moins une image obtenue par l'intermédiaire de la au moins une caméra tout en affichant le contenu multimédia superposé à la seconde image, si un objet externe se déplaçant dans une partie de l'environnement caché en affichant le contenu multimédia superposé à la seconde image existe ; et
sur la base de l'identification que l'objet externe existe, cesser (2006) d'afficher la seconde image et/ou diminuer (2008) l'opacité du contenu multimédia affiché par l'intermédiaire du dispositif d'affichage.

10. Dispositif portable de la revendication 9, lesdites instructions, lorsqu'elles sont exécutées par le processeur (210), amenant en outre le dispositif portable à :
identifier (2010), sur la base d'au moins une image obtenue par l'intermédiaire de la au moins une caméra tout en cessant d'afficher la seconde image et en affichant le contenu multimédia, si le mouvement de l'objet externe est terminé ou non ; et
sur la base de l'identification que le mouvement de l'objet externe est terminé, afficher (2012) le contenu multimédia superposé à la seconde image en reprenant l'affichage la seconde image dans la position.

11. Dispositif portable de la revendication 1, lesdites instructions, lorsqu'elles sont exécutées par le processeur (210), amenant en outre le dispositif portable à :
tout en affichant le contenu multimédia superposé à la seconde image, identifier (2202) une couleur d'au moins un premier objet visuel à afficher comme étant associée au contenu multimédia ;
identifier (2204), sur la base de la couleur de l'au moins un premier objet visuel ou d'une couleur du contenu multimédia, une couleur d'un second objet visuel à afficher sous l'au moins un premier objet visuel ; et
afficher (2206) le au moins un premier objet visuel associé au contenu multimédia, de façon à ce qu'il soit superposé au second objet visuel avec la couleur identifiée.

12. Dispositif portable de la revendication 11, lesdites instructions, lors qu'elles sont exécutées par le processeur (210), amenant le dispositif portable à :
à condition que le au moins un premier objet visuel ne comporte qu'au moins une couleur spécifiée, identifier la couleur du second objet visuel, sur la base de la couleur du contenu multimédia parmi la couleur de l'au moins un premier objet visuel et la couleur du contenu multimédia ; et
à condition que l'au moins un premier objet visuel comporte une autre couleur distincte de l'au moins une couleur spécifiée, identifier la couleur du second objet visuel, sur la base de la couleur de l'au moins un premier objet visuel parmi la couleur de l'au moins un premier objet visuel et la couleur du contenu multimédia.

13. Dispositif portable de la revendication 1, lesdites instructions, lorsqu'elles sont exécutées par le processeur (210), amenant le dispositif portable à :
sur la base de l'identification que le contenu multimédia comprend la au moins une zone, identifier le rapport de la taille de la au moins une zone sur la taille du contenu multimédia ;
sur la base de l'identification que le rapport est supérieur ou égal à un rapport de référence, afficher (1406) le contenu multimédia superposé à la seconde image ; et
sur la base de l'identification que le rapport est inférieur au rapport de référence, s'abstenir d'obtenir la première image et la seconde image et afficher (1408) le contenu multimédia.

14. Dispositif portable de la revendication 1, lesdites instructions, lorsqu'elles sont exécutées par le processeur (210), amenant le dispositif portable à :
avant l'affichage du contenu multimédia de façon à ce qu'il soit superposé à la seconde image, afficher, par l'intermédiaire du dispositif d'affichage, le contenu multimédia dans la position ; et
ladite intensité de la lumière traversant ladite au moins une zone étant :
supérieure ou égale à une intensité de référence pendant que le contenu multimédia est affiché sans être superposé à la seconde image ; et
inférieure à l'intensité de référence pendant que le contenu multimédia est affiché superposé à la seconde image.

15. Procédé permettant l'exploitation d'un dispositif portable (110) comprenant au moins une caméra (230) et un dispositif d'affichage (250), le procédé comprenant :
la réception (302) d'une entrée pour afficher un contenu multimédia (600) dans une zone d'affichage (115) du dispositif d'affichage ;
sur la base de la réception de l'entrée, l'identification (304) pour savoir si la luminosité d'un environnement (650) autour du dispositif portable est supérieure ou égale à une luminosité de référence :
sur la base de l'identification que la luminosité est supérieure ou égale à la luminosité de référence, l'identification (306) pour savoir si le contenu multimédia comprend au moins une zone (610) comportant une couleur spécifiée ;
sur la base de l'identification que le contenu multimédia comprend la au moins une zone, l'obtention (308) d'une première image pour une partie de l'environnement correspondant à une position dans laquelle le contenu multimédia doit être affiché, par l'intermédiaire de la au moins une caméra ;
l'obtention (310) d'une seconde image dans laquelle une couleur de la première image est convertie ; et
l'affichage (312), par l'intermédiaire du dispositif d'affichage, du contenu multimédia, de façon à ce qu'il soit superposé à la seconde image affichée dans la position.
